(19)

**Europäisches Patentamt**
**European Patent Office**
**Office européen des brevets**

(11) **EP 4 349 509 A1**

(12) **EUROPEAN PATENT APPLICATION**

(43) Date of publication:
**10.04.2024 Bulletin 2024/15**

(21) Application number: **23163669.7**

(22) Date of filing: **23.03.2023**

(51) International Patent Classification (IPC):
*B22F 10/28* (2021.01)    *B33Y 10/00* (2015.01)
*B33Y 70/00* (2020.01)    *C22C 14/00* (2006.01)
*C22F 1/18* (2006.01)    *C22C 1/04* (2023.01)

(52) Cooperative Patent Classification (CPC):
**C22C 14/00; B22F 10/28; B33Y 10/00;**
**B33Y 70/00; C22C 1/0458; C22F 1/183**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **07.10.2022 EP 22200194**

(71) Applicant: **Université catholique de Louvain**
**1348 Louvain-la-Neuve (BE)**

(72) Inventors:
• **Duchaussoy, Amandine**
**76250 Déville-lès-Rouen (FR)**
• **Coffigniez, Marion**
**1348 Louvain-la-Neuve (BE)**
• **Choisez, Laurine**
**1348 Louvain-la-Neuve (BE)**
• **Jacques, Pascal**
**1457 Tourinnes-Saint-Lambert (BE)**

(74) Representative: **De Clercq & Partners**
**Edgard Gevaertdreef 10a**
**9830 Sint-Martens-Latem (BE)**

(54) **TITANIUM ALLOY, POWDER OF THE TITANIUM ALLOY AND METHOD OF MANUFACTURING THEREOF**

(57) The present invention relates to the field of metallurgy, more particularly non-ferrous alloys. The first aspect of the present invention relates in particular to titanium (Ti) alloys suitable to be manufactured by a method of additive manufacturing such as laser powder bed fusion. The titanium alloy, according to the present invention, comprises titanium and further metallic elements, wherein titanium form microstructural titanium alloy matrix. The further metallic elements are homogenously dispersed in the titanium alloy matrix. The alloy microstructure, when the alloy is subjected to mechanical loading, changes its microstructure from an initial state to a final state through a martensitic transformation or a mechanical twinning. The initial state comprises a plurality of defects and a plurality of porosities, wherein the plurality of defects and said plurality of porosities represent between 1% and 6% in volume of the alloy; and wherein strength-ductility balance the final state is lower than 15% compared to the initial state. The second aspect of the present invention relates to a powder made of the titanium alloy according to the first aspect of the present invention. The third aspect of the present invention relates to a method of manufacturing the titanium (Ti) alloys.

EP 4 349 509 A1

## Description

### Technical field

The present invention relates to the field of metallurgy, more particularly non-ferrous alloys. The invention relates in particular to titanium (Ti) alloys suitable to be manufactured by a method of additive manufacturing such as laser powder bed fusion.

In a second aspect of the present invention relates to a powder made of the titanium alloy according to the first aspect of the present invention.

In a third aspect of the present invention relates to a method of manufacturing the titanium (Ti) alloys.

### Background art

Among the wide range of metallic alloys in use today, only a few can be reliably processed by additive manufacturing such as Laser Powder Bed Fusion (L-PBF), i.e., without presenting detrimental defects such as hot cracking [1], balling [2], lack of fusion [3], or other defects inherent to the process [4].

The microstructure defects resulting from the 3D printing process generally result in a drastic decrease of the ductility of the alloy. Common solutions consist in optimizing the process conditions to decrease the defect density, and developing/optimizing thermomechanical posttreatments to "neutralize" the remaining defects. For example, Hot Isostatic Pressing is almost systematically applied on Ti-6AI-4V L-PBF parts to remove porosities [5-9]. However, this treatment leads to a coarsening of the microstructure, which reduces the yield strength. Similarly, stress-relief heat-treatments generally applied on Al-Si alloys destroy the fine eutectic microstructure developed during rapid solidification [10]. Therefore, there is a demand for processing the materials initially unsuitable for L-PBF which would preserve the material properties in its initial state.

Nevertheless, attempts to chemically modify conventional alloys in order to enhance their suitability for the L-PBF process have been carried out. Vrancken et al. [11] added pure Mo powder to pre-alloyed TA6V powder so that it modifies the solidification path. This finally resulted in a completely new microstructure, reducing columnar grain growth and increasing ductility while only slightly reducing the strength of the alloy. Martin et al. [12] addressed the hot tearing issue encountered in high performance aluminium alloys (6XXX and 7XXX series) by adding nanoparticles that act as nucleation sites for multidirectional solidification, resulting in crack-free, thin and equiaxed microstructures. In addition, Montero et al. [13] found that the crack susceptibility of the Al7075 alloy was lowered by adding Si powder to form a low-melting eutectic that filled the cracks during the last stage of solidification.

Meanwhile, efforts are made to produce β-metastable Ti alloys exhibiting coupled transformation-induced plasticity (TRIP) and twinning-induced plasticity (TWIP) effects, mainly relying on the orbital electron alloy design method [14-16]. These simultaneous plasticity mechanisms add an impressive work hardening capacity [14-16] to an alloy family already known for its high strength-to-weight ratio, its high fatigue resistance and hardenability [17]. In addition, Choisez et al., showed that the TRIP and TWIP Ti12Mo alloy exhibits an outstanding toughness resulting from a unique fracture process [18]. It therefore seems of interest to investigate the level of properties that can be achieved by LPBF.

A first work has been conducted in this sense by Duan et al [19], starting, for practical and economic reasons, from a powder blend of pure Ti and pure Mo powders as a feedstock. They showed that it is very challenging to print the Ti-12Mo grade by in situ alloying without keeping unmelted Mo particles, due to the large difference in melting temperature between Mo (2610°C) and Ti (1668°C). To achieve a relatively homogeneous Mo concentration, they applied several powder remelting during the printing process. However, this leads to the loss of the impressive ductility and work hardening ability of the Ti-12Mo alloy, due to the suppression of TRIP and TWIP effects during the deformation. A study on another β-metastable alloy highlights that this loss of TRIP and TWIP mechanisms after L-PBF can be attributed to the formation of omega and alpha precipitates during the reheating associated with the manufacture of successive layers. Hence, they were able to reactivate the TRIP and TWIP effects by applying an annealing treatment on the printed parts followed by water quenching [20].

As a first approach in this work, the L-PBF process was applied to a mixture of pure Ti and pure Mo powders, followed by an annealing treatment and a water quench. Samples with different degrees of chemical homogeneity and different porosity levels were printed. This enables to estimate the reachable properties regarding to the microstructures produced. Mechanical properties achieved, including 3D damage mechanism characterisation were compared to the cast reference previously studied [14,16,18,21].

It is an object of the present invention to overcome the above-mentioned problems and to provide titanium alloy suitable to be manufactured by Laser Powder Bed Fusion, whereas at least partially preserving the mechanical properties of the material, such as yield strength, ultimate tensile stress, uniform elongation, fracture strain, true fracture strain/stress, fracture toughness, essential work of fracture and fatigue.

## Summary of the invention

β-metastable Ti alloys exhibit a very large work hardening rate together with an outstanding resistance to damage nucleation, bringing a very high ductility. Such a behaviour could enable counteracting the decrease of mechanical properties caused by solidification cracking/hot tearing, balling or porosity formation during additive manufacturing such as through laser powder bed fusion.

More specifically, said new alloys are defects-tolerant, i.e. for which a maximum drop of 10% of the levels of properties (mostly uniform deformation, ductility and toughness) is ensured for up to 5% of defects (cavities, inclusions, other phases).

As a non-limiting example, the binary Ti-12 wt.% Mo and Ti-8.5Cr-1.5Sn (wt %) grade were studied, using powder mixture as a first approach. As-printed Ti-12 wt.% Mo microstructures highlight the formation of structures related to the solidification scheme, as well as specific Mo solute partitioning depending on the printing parameters. Such a specific microstructure brings a large increase of the tensile strength compare to the cast reference. Furthermore, when the chemical homogenisation obtained is large enough to reach 95 % of β-metastable microstructure, ductility comparable to the cast reference is reached after a simple flash heat treatment, as well as an outstanding low sensitivity to defects.

Using blended powders as raw material for Ti-12 wt.% Mo and Ti-8.5Cr-1.5Sn (in wt.%) alloys as examples allowed a thorough analysis of the influence of the presence of defects on the mechanical properties in the case of microstructures differing by the amount of β metastable phase. The inventors demonstrate that with a sufficient amount of β metastable phase, a unique tolerance to defects is achieved. Indeed, only a slight decrease of the mechanical properties is observed when large amounts or size of defects are present in the microstructure. Furthermore, equal or improved strength-ductility trade off was obtained in the L-PBF alloys compared to their conventionally processed counterpart. Complementary investigations are carried out to highlight the origin of this behaviour.

More particularly the invention provides for the following aspects:

1. A titanium alloy suitable to be manufactured by additive manufacturing, preferably by laser powder bed fusion,

- wherein the alloy comprising titanium and further metallic elements;

- wherein said titanium forms a microstructural titanium alloy matrix;

- wherein the further metallic elements are homogenously dispersed in said titanium alloy matrix;

- wherein when the alloy is subjected to mechanical loading, changes its microstructure from an initial state to a final state through a martensitic transformation or a mechanical finrinning;

- wherein in the initial state, said alloy comprises a plurality of defects; and

- wherein the plurality of defects represents between 1% and 6% in volume of the alloy; and

- wherein the difference between the strain (strength-ductility balance) of the final state versus the initial state is less than 15%.

The measurement of the relative volume of defects in the alloy can be done by image analysis on optical microscopes in 2D on cross-sections of the alloy, or by measuring the density compared to the bulk by Archimede's method, or in 3D by computed tomography.

2. The alloy according to aspect 1, wherein said defects are selected from: porosities, intermetallic particles, and brittle second phases, preferably porosities.

It is important to note that the manner in which said defects such as porosities are created is not limiting, as long as the volume percentage, maximum pore size, pore size distribution and pore distribution is respected. The pore size is typically 300 micrometer or lower, or 200 micrometer or lower, or between 1 and 300 micrometer, between 1 and 200 micrometer or between 1 and 100 micrometer. The pore size can in specific embodiments be 100 micrometer or lower, more preferably between 1 and 100 micrometer, such as between 1 and 90 micrometer, between 1 and 80 micrometer, between 1 and 70 micrometer, between 1 and 60 micrometer, or between 1 and 50 micrometer. A standard deviation of about 20 μm can be taken into account.

Pore and/or defect size can be measured by optical or electronic microscope on 2D cross-sections, or in 3D using computed tomography. The volume percentage, maximum pore size, pore size distribution and pore distribution in the sample can be statistically obtained using image analysis.

In a specific example, density measurements were performed both by the Archimede's method according to the ASTM-B311 procedure [26] using ethanol as wetting medium, and by light microscopy and automated image analysis using the imaged software (NIH.gov). In the case of image analysis, porosities were first thresholded from the rest of the microstructure. The total porosity fraction as well as the pore size distribution were evaluated for each set of building parameters on a surface of 24 mm$^2$.

3. The alloy according to aspect 1 or 2, wherein the microstructural titanium alloy matrix comprises a β-metastable titanium microstructure.

4. The alloy according to aspect 3, wherein the microstructural titanium alloy matrix is at least 95% of β-metastable microstructure, preferably at least 97 % of β-metastable microstructure.

5. The alloy according to aspect 4, wherein the microstructural titanium alloy matrix comprises not more than 5% of non-β-metastable titanium microstructures, such as 5% or less, 4% or less, 3% or less, 2% or less or 1% or less of non-β-metastable titanium microstructure. Microstructures can be measured and quantified using EDX or XRD by linking the local compositions measured with the known phases stabilized at these compositions. The non-β-metastable titanium microstructures can be α', α", $\beta_{res}$ and β-stable microstructures.

6. The alloy according to anyone of the previous aspects, wherein the porosity of the final state is 50% or less in volume, such as 45% or less, 40% or less, 35% or less, 30% or less, 25% or less, 20% or less, 15% or less, 10% or less, 9% or less, 8% or less, 7% or less, 6% or less, 5% or less, 4% or less, 3% or less, 2% or less, 1% or less,, such as between 0.1 and 5 % in volume, between 2 - 5 % in volume, or between 3% and 5% in volume, when measured by micrograph.

7. The alloy according to anyone of the previous aspects, wherein the difference between the initial (i.e. without porosities) strain and the final (with porosities) strain of alloy is lower than 10%, preferably, lower than 9%, 8%, 7%, or 6%, more preferably lower than 5%.

8. The alloy according to anyone of the previous aspects, wherein the further metallic element is selected from the group comprising: niobium, molybdenum, chromium, vanadium, zirconium, tin, tungsten, and aluminium, or mixture thereof.

9. The alloy according to anyone of the previous aspects comprises binary alloys selected from the group comprising:

- Ti - Nb system with Nb content comprised between 38 and 42 wt.%;

- Ti - Mo system with Mo content comprised between 10 and 15 wt.%;

- Ti - Cr system with Cr content comprised between 9 and 11.5 wt.%;

- Ti - V system with V content comprised between 14.8 and 20 wt.%; or
  ternary alloys selected from the group consisting of:

- Ti - Mo - Zr system with 11 ≤ Mo ≤15 wt.%; and 5 ≤ Zr ≤ 10 wt.%

- Ti - Mo - Sn system with 10 ≤ Mo ≤12 wt.%; and 2 ≤ Sn ≤ 6 wt.%.

In a preferred embodiment, the amount of impurities or interstitial elements in the alloys is lower than 1 wt.%, preferably lower than 0,9 wt.%, more preferably below 0,8 wt.%. In one particular example, the titanium used is grade 1 titanium, having an amount of impurities below 0,3 wt.% and having interstitial element C below 0.1 wt.%; H below 0.015 wt. %; Fe below 0.2 wt.%; N below 0.03 wt.%; O below 0.18 wt.%; total other impurities below 0.3 wt.%. Other titanium grades can be used as well, as long as the criterion on 95% beta-metastable microstructures is respected.

10. In a preferred embodiment of anyone of the previous aspects, said alloy is comprised of: Ti-12 wt.% Mo ; Ti-7Mo-3Cr; Ti-8.5Cr-1.5Sn ; Ti-9Mo-6W ; Ti-25Nb-3Zr-3Mo-2Sn ; Ti-10Mo-4Nb-2V-3Al; Ti-6.5Cr-1.5Al-1Fe ; Ti-7Cr-1Al-1Fe; Ti-7Cr-1Sn-1Fe; Ti-7Cr-1Sn-1Fe-0.5Zr; Ti-7Cr-1.5Sn-(0.8-1)Fe; Ti-8.5Cr-1.5Al; Ti-3Mo-3Cr-2Fe-(1-2)Al; Ti-5Mo-1Fe-3Sn; Ti-7Mo-3Cr-3Nb-3Al;Ti-8Mo-2Fe; Ti-(9-10.5) Mo-1Fe; Ti-9,7Nb-9,5Zr-6,2Sn-5Mo; Ti-16Nb-8Mo;

Ti-29.3Nb-13.5Ta-4.43Zr; Ti-10V-2Fe-3Al; Ti-10V-4Cr-1Al; Ti-11.6V-4.1Fe-2.6Al; Ti-12V-2Fe-1Al; Ti-14V-2Fe-1Al; Ti-21W or Ti-4Al-7Mo-3V-3Cr grade titanium.

11. A powder for additive manufacturing by laser powder bed fusion comprising titanium alloy according to anyone of the previous aspects.

12. The powder according to aspect 11, wherein the average powder size is below 250 $\mu$m.

13. The powder according to aspect 12, wherein powder size distribution of $D_{50}$ is between 20 - 40 $\mu$m; and $D_{90}$ is between 30 - 60 $\mu$m.

14. A method of manufacturing titanium alloy comprising the following steps:

- Providing a titanium alloy comprising titanium and further metallic elements, wherein said titanium alloy forms a microstructural titanium alloy matrix; wherein the further metallic elements are homogenously dispersed in the titanium alloy matrix; and wherein said titanium is at least 95% of $\beta$-metastable;

- Optionally increasing the temperature of the alloy above the $\beta$ transus temperature; and water quenching of the homogenized alloy;

- Introducing defects in the initial state of said titanium alloy representing between 1% and 6% in volume of the alloy.

As indicated above, the manner in which said porosities and/or defects are created in the alloy is not limited and can be achieved through the specific conditions and parameters of additive manufacturing or can be achieved by introducing such defects mechanically through drilling, or can be achieved by using a foaming strategy sponge-like matrix.

15. The method according to aspect 14, comprising the steps of: elementary titanium alloy powder mixing, additive manufacturing, flash heat treatment above the $\beta$ transus temperature, and water quenching.

16. The method according to aspect 15, wherein said additive manufacturing is done by means of selective laser melting such as through Laser Power Bed Fusion.

17. The method according to aspect 15 or 16, wherein the alloy comprises molybdenum and wherein the step of additive manufacturing is done at an energy density of 120 J/mm$^3$ or more, preferably more than 130 J/mm$^3$, even more preferably more than 150 J/mm$^3$ such as 160 J/mm$^3$ or more. In a preferred embodiment, said additive manufacturing is done using LPBF in a high purity Ar atmosphere (residual oxygen under 200 ppm)

18. The method according to any one of aspects 15 to 17, wherein the temperature of the powder is above $\beta$ transus temperature for at least 2 minutes, preferably for at least 10 minutes, generally with a maximum of 20, 25 or 30 minutes, in an artificial atmosphere consisting of inert gas, preferably argon. In a preferred embodiment, said temperature is kept between 900 and 920°C during 2 to 5 minutes under high purity Ar atmosphere. Non-limiting parameters for LPBF are as follows:

**For example for Ti-12Mo from a mix of powders:**

- Elemental powders of titanium and molybdenum are mixed in a turbula shaker mixer e.g. for 15h, resulting in a powder size distribution of $D_{50}$ and $D_{90}$ about 30$\mu$m and 45$\mu$m, respectively.

- Additive manufacturing is carried out using DMP-X200 3D printer (3D Systems Inc, United States) in a high purity Ar atmosphere (residual oxygen under 200 ppm). The printing parameters are preferably adjusted as follows:

- Laser power P comprised between 175 and 205 W

- Laser velocity v comprised between 650 and 750 mm/s

- Hatching space h comprise between 45 and 50 $\mu$m.

- Layer thickness t between 25 and 35 $\mu$m.

- The volumic energy density defined as $\dfrac{P}{v*h*t}$ preferably comprised between 170 and 190 J/mm$^3$

- $\beta$-solubilisation by flash heat treatment at a temperature between 900°C and 920°C during 2 to 15 minutes under high purity Ar atmosphere followed by water quenching.

- Optionally machining of flat dog-bones specimens, for example using electrical discharge machining.

**For example for Ti-8.5Cr-1.5Sn from mix of powders:**

- Elemental powders of titanium, chromium and tin are mixed in a turbula shaker mixer for 15h, giving a powder size distribution of $D_{50}$ and $D_{90}$ about 25$\mu$m and 36$\mu$m, respectively.

- Additive manufacturing using DMP-X100 3D printer (3D Systems Inc, United States) in a high purity Ar atmosphere (residual oxygen under 200 ppm). The printing parameters are preferably adjusted as follows:

  - Laser power P comprised between 80 and 120 W

  - Laser velocity v comprised between 450 and 550 mm/s

  - Hatching space h comprise between 65 and 70 $\mu$m.

  - Layer thickness t between 25 and 35 $\mu$m.

  - The volumic energy density defined as $\dfrac{P}{v*h*t}$ preferably comprised between 85 and 95 J/mm$^3$

- Homogenization heat treatment at a temperature between 900°C and 920°C during 15-30 min, followed by water quenching

- Optionally machining of flat dog-bones specimens, for example using electrical discharge machining

**For example for Ti-12Mo pre-alloyed powders:**

- Sieving of Ar atomized prealloyed powders to keep only particles presenting a diameter below 106 $\mu$m.

- Additive manufacturing using DMP-X200 3D printer (3D Systems Inc, United States) in a high purity Ar atmosphere (residual oxygen under 200 ppm). The printing parameters are preferably adjusted as follows:

  - Laser power P comprised between 225 and 275 W

  - Laser velocity v comprised between 700 and 800 mm/s

  - Hatching space h comprise between 80 and 85 $\mu$m.

  - Layer thickness t between 25 and 35 $\mu$m.

  - The volumic energy density defined as $\dfrac{P}{v*h*t}$ preferably comprised between 130 and 140 J/mm$^3$

- $\beta$-solubilisation by flash heat treatment at a temperature between 900°C and 920°C during 2 to 15 minutes under high purity Ar atmosphere followed by water quenching.

- Optionally machining of flat dog-bones specimens, for example using electrical discharge machining.

19. The method according to aspect 14, wherein said defects in the alloy are created though laser-drilling of holes in a wrought plate of titanium material. This technique can be applied to all types of titanium alloys.

20. The method according to aspect 18, comprising the following steps: casting, cold rolling, recrystallisation, optionally machining, and laser-hole drilling.

21. The method according to aspect 20, wherein said casting is done by means of arc melting, a vacuum induction furnace, or cold crucible levitation melting or wherein said alloy cast is produced from commercially pure materials under high Ar purity atmosphere.

22. The method according to aspect 20 or 21, wherein said cold rolling is done through machining of the ingot to get a 1 mm thick slice, which is heated at a temperature above the $\beta$ transus temperature followed by water quenching; cold rolling down to 0.1 mm thickness. Non-limiting examples of said heat treatment are as follows:

- Between 900 and 920°C for Ti-12Mo, Ti-8Mo-2Fe, Ti-10.5Mo-1Fe, Ti-12Mo-10Zr, Ti-8.5Cr-1.5Sn, orTi-10V-4Cr-1Al,

- Between 950 and 975°C for Ti-15V-3Mo-2Al, or

- Between 1000°C and 1030°C for Ti-3Al-5Mo-7V-3Cr (wt.%)) during 15 - 20 min.

23. The method according to any one of aspects 20 to 22, wherein said recrystallization step comprises heat treatment under high-purity Ar atmosphere, followed by water quenching. Non-limiting examples of said heat treatment are as follows:

- Between 900 and 920°C for Ti-12Mo, Ti-8Mo-2Fe, Ti-10.5Mo-1Fe, Ti-12Mo-10Zr, Ti-8.5Cr-1.5Sn, and Ti-10V-4Cr-1Al,

- Between 950 and 975°C for Ti-15V-3Mo-2Al, or

- Between 1000°C and 1030°C for Ti-3Al-5Mo-7V-3Cr (wt.%)) during 10 - 20 min.

24. The method according to any one of aspects 20 to 23, wherein said laser-drilling comprises creating several voids of 10-50 $\mu$m in diameter by laser-drilling.

25. The method according to aspect 14, said defects in the alloy are created though compaction followed by pressure-less sintering. This technique is particularly useful for pre-alloyed titanium alloy powders.

26, The method according to aspect 25, comprising the steps of: sieving the pre-alloyed alloy powder, cold compaction, sintering, and optionally machining.

27. The method according to aspect 25 or 26, wherein said cold compaction can be done at a pressure of between 700 and 800 MPa.

28. The method according to any one of aspects 25 to 27, wherein said sintering encompasses subjecting the compacted product to a heating ramp of 10-15°C / min up to a sintering plateau at a temperature comprised between 1150 and 1250 °C, for a duration comprised between 2 and 3 hours. Non-limiting parameters for such a compaction process are as follows (for example for pre-alloyed titanium alloy powders, more preferably for Ti12Mo pre-alloyed titanium powder):

- Sieving of Ar atomized pre alloyed powders to keep only particles presenting a diameter below 250 $\mu$m;

- Cold compaction between 700 and 800 MPa;

- Sintering treatment under Ar atmosphere made of:

  - a heating ramp of 10-15°C / min;

- a sintering plateau at a temperature comprised between 1150 and 1250 °C, for a duration comprised between 2 and 3 hours;

- a cooling by water quenching;

- Optionally machining of flat dog-bones specimens, for example using electrical discharge machining.

**Brief description of the drawings**

Figure 1: represents scanned surface of Ti-12Mo alloy with microstructures obtained by laser powder bed fusion with a laser beam having an energy density of 95 J/mm$^3$ (a and b), 120 J/mm$^3$ (c and d), 167 J/mm$^3$ (e, f and h) in comparison with the cast sample (g). Dark arrows highlight the martensite islets as emphasised by image (h).

Figure 2a: represents XRD diffractograms for the three L-PBF samples of Ti-12Mo alloy in comparison with the cast relating to chemical and microstructural heterogeneities.

Figure 2b: represents an image of reconstructed phase map from EDS mapping for Ti-12Mo alloy printed with 95 J/mm$^3$. Increasing the energy density enhances the chemical (and thus microstructural) homogeneity.

Figure 3: represents a graph of tensile curves after L-PBF and heat treatment for the three different printing parameters compared with the cast reference. Homogeneous L-PBF samples present higher properties than the cast reference.

Figure 4: represents X-ray tomographic slices presenting the evolution during the tensile test of the same defect population within Ti-12Mo alloy printed with 120 J/mm$^3$ (a), and within the sample printed with 167 J/mm$^3$ (b). The highest reached local true strain is indicated for each case and main Mo particles breakage are highlighted.

Figure 5: SEM and EDX micrographs of (a) Ti-Mo blend, (b) Ti-Cr-Sn blend and (c) Ti6Al4V powder. The corresponding particle size distribution (PSD) are given in (d).

Figure 6: Light micrograph of Ti12Mo samples when the density is >99% (a) and <98% (b).

Figure 7: (a) Oxygen level as a function of the volumetric injected energy during printing of Ti12Mo. Oxygen levels of the powder and of the cast reference are also indicated.

Figure 8: (a) Band contrast map of a Ti-12Mo sample processed by LPBF (P=275W, S=1500mm s-1, hs=50 $\mu$m) and (b) reconstructed phase map from EDS mapping. (c) Magnified view of the dark features in (a) highlighting the martensitic needles of $\alpha$" phase (in dark grey) in the Mo-depleted zones.

Figure 9: EDS-based phase maps of some Ti12Mo samples.

Figure 10: Evolution of the proportions of the main phases as a function of the deviation factor for all fabricated samples of Ti12Mo.

Figure 11: Deviation from homogeneity factor as a function of the lasing power and lasing speed (size of circles) for samples fabricated with 70 $\mu$m and 50 $\mu$m hatch spacing for Ti12Mo alloy.

Figure 12: SEM micrographs of L-PBF processed alloys with building direction orientated vertically, (a) and (b), as-built (275 W, 1500 mm s-1) and heat treated (90 s at 900°C + WQ) Ti12Mo, respectively. (c) and (d): TiCrSn as-built and heat-treated (15 min at 900°C + WQ), respectively. (e) and (f): TA6V as-built and heat treated (2h at 920°C + AC), respectively. Insets in (a) and (b) highlight melt pool boundaries.

Figure 13: EDS-based phase maps of Cr in TiCrSn (a, c) and of Mo in Ti12Mo, 275 W, 1500 mm s1 (b, d) samples. In wrought (a, b) and printed + heat treated (c, d) states.

Figure 14: Engineering tensile stress-strain curves of Ti12Mo (a), TiCrSn (b) and TA6V (c) alloys in LPBF as-built conditions and after heat treatment.

Figure 15: Effect of processing parameters (Power and Speed) on the mechanical properties of Ti12Mo processed by L-PBF and heat treated. Curves in (a) and (b) correspond to 70 $\mu$m and 50 $\mu$m of hatch spacing, respectively.

Figure 16: SEM and EBSD micrographs of strained Ti12Mo (a, c, d) and TiCrSn (b) samples processed by L-PBF, illustrating the activation of the TRIP and TWIP effects.

Figure 17: Representative SEM micrographs of (a-b) fractured tensile specimens polished at mid thickness, and of (c-f) the fracture surface. Processing conditions of sample corresponding to (a), (c) are 100 W-700 mm s-1-50 $\mu$m; to (b), (e) are 175 W-700 mm s-1-50 $\mu$m; to (d) are 175 W-1200 mm s-1-50 $\mu$m and to (f) are 175 W-1200 mm s-1-70 $\mu$m.

Figure 18: Uniform elongation as a function of the defects fraction (a) or defects average size (b) for Ti12Mo printed samples. Ranges of proportions of $\beta$-metastable phase has also been indicated. Circles represent the experimental points. Dotted line corresponds to the uniform elongation of cast reference Ti12Mo.

Figure 19: Ductility expressed as the product of the ultimate tensile strength and uniform elongation as a function of the defects fraction. Ranges of proportions of $\beta$-metastable phase has also been indicated. Circles represent the experimental points. Dotted line corresponds to the level reached by the cast reference Ti12Mo.

Figure 20: Tensile curves of TiMo (a) and TiCrSn (b) alloys after printing by L-PBF and heat treatment compared to their wrought/cast reference counterpart. dotted line parts correspond to the extrapolation between the true uniform strain and true fracture strain.

Figure 21: Combinations of uniform elongation and UTS forTi12Mo (triangles) TiCrSn (diamonds) and TA6V (dots) for the wrought state / cast reference (empty markers) and after printing (full markers). For TA6V, a distinction is made between the as-built state (black dots), annealed state (by pre-lasing, by hot building plate, or post printing treatment) (grey encircled dots) and HIP treatments (dotted encircled black dots).

## Detailed Description

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms also encompass "consisting of" and "consisting essentially of", which enjoy well-established meanings in patent terminology.

The recitation of numerical ranges by endpoints includes all numbers and fractions subsumed within the respective ranges, as well as the recited endpoints. This applies to numerical ranges irrespective of whether they are introduced by the expression "from... to..." or the expression "between... and..." or another expression.

The terms "about" or "approximately" as used herein when referring to a measurable value such as a parameter, an amount, a temporal duration, and the like, are meant to encompass variations of and from the specified value, such as variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more members or at least one member of a group of members, is clear per se, by means of further exemplification, the term encompasses inter alia a reference to any one of said members, or to any two or more of said members, such as, e.g. any $\geq$3, $\geq$4, $\geq$5, $\geq$6 or $\geq$7 etc. of said members, and up to all said members. In another example, "one or more" or "at least one" may refer to 1, 2, 3, 4, 5, 6, 7 or more.

The discussion of the background to the invention herein is included to explain the context of the invention. This is not to be taken as an admission that any of the material referred to was published, known, or part of the common general knowledge in any country as of the priority date of any of the claims.

Throughout this disclosure, various publications, patents and published patent specifications are referenced by an identifying citation. All documents cited in the present specification are hereby incorporated by reference in their entirety. In particular, the teachings or sections of such documents herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the invention. When specific terms are defined in connection with a particular aspect of the invention or a particular embodiment of the invention, such connotation or meaning is meant to apply throughout this specification, i.e. also in the context of other aspects or embodiments of the invention, unless otherwise defined. For example, embodiments directed to products are also applicable to corresponding features of methods and uses.

In the following passages, different aspects or embodiments of the invention are defined in more detail. Each aspect or embodiment so defined may be combined with any other aspect(s) or embodiment(s) unless clearly indicated to the contrary. In particular, any feature indicated as being preferred or advantageous may be combined with any other feature or features indicated as being preferred or advantageous.

Reference throughout this specification to "one embodiment", "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, alternative combinations of claimed embodiments are encompassed, as would be understood by those in the art.

In a first aspect of the invention, a new type of alloys is provided. Typically, said alloy is a titanium alloy, comprising titanium and further metallic elements, wherein the titanium form a microstructural titanium alloy matrix and wherein the further metallic elements are homogenously dispersed in said titanium alloy matrix. When such an alloy is subjected to mechanical loading, its microstructure changes from an initial state to a final state through a martensitic transformation or a mechanical twinning. The initial state comprises a plurality of defects and a plurality of porosities, which represent between 1% and 6% in volume of the alloy; and the strength-ductility balance of the final state is up to 15% lower compared to that of the initial state.

The above-mentioned alloy shows TWIP (Twinning Induced Plasticity) effect or even more advantageously cumulated TWIP (Twinning Induced Plasticity) and/or TRIP (Transformation Induced Plasticity) effects. In a particular embodiment, The above-mentioned alloy shows TRIP effect.

The titanium alloys according to the present invention, provide the advantage of preserving strength-ductility balance despite the presence of defects and porosities of the microstructure.

When any titanium alloy is manufactured by an additive manufacturing process, the process usually leads to a higher percentage in volume of defects and porosities than when classical processing is used. The advantage of the strength-ductility balance of the titanium alloy according to the present invention, allows to manufacture the titanium alloy by the method of additive manufacturing while showing uniform elongation, improved yield strength, ultimate tensile stress, true fracture strain/stress, fracture toughness, essential work of fracture, high level global and local work hardening which are kept compared to the cast reference.

In a preferred embodiment, the microstructural titanium alloy matrix comprises β-metastable phase. β-metastable titanium alloys exhibit a very large work hardening rate together with an outstanding resistance to damage nucleation, resulting in a very high ductility. Such a behaviour enables to counteract the decrease of mechanical properties caused by solidification cracking/hot tearing, balling or porosity formation during laser powder bed fusion.

The term "microstructure" is defined herein as a material structure seen at the microscopic level. In accordance with the present invention, the scale of microstructure ranges from 1 nanometer to 1 mm, preferably from 1 nanometer to 50 or 500 micrometers.

Even more preferably, titanium alloy matrix is at least 95% of β-metastable phase, preferably at least 97 % of β-metastable phase. When the chemical homogenisation obtained is large enough to reach at least 95 % of β-metastable microstructure, ductility comparable to the cast reference is reached after a simple flash heat treatment, as well as an outstanding low sensitivity to defects. This impressive defect tolerance is nevertheless only measured in samples containing a high proportion of metastable beta phase (above 95%). In addition, in a preferred embodiment of the alloy, reaching chemical homogenization, in the case of β-metastable titanium alloys, brings a high tolerance to defects. The drop in properties should be under 15%.

Even more preferably, the microstructural titanium alloy matrix in the alloy comprises at least 2% of β-stable titanium microstructures, preferably at least 1% of β-stable titanium microstructures.

In a preferred embodiment of the alloys, the porosity of the final state is between 0.1 and 5 % in volume, preferably between 2 - 5 % in volume, more preferably between 3% and 5% in volume, when measured by micrograph.

In another preferred embodiment, the plurality of defects and the plurality of porosities of the initial state represent between 0,1% and 15% in volume, preferably between 0,5% and 15% in volume, more preferably between 0,8% and 10% in volume.

In another preferred embodiment, further metallic element is selected from the group comprising: niobium, molybdenum, chromium, vanadium, zirconium, tin, tungsten, aluminum, or mixture thereof.

More preferably, the alloy can comprise:

binary alloys selected from the group comprising:

- Ti - Nb system with Nb content comprised between 38 and 42 wt.%;

- Ti - Mo system with Mo content comprised between 10 and 15 wt.%;

- Ti - Cr system with Cr content comprised between 9 and 11.5 wt.%;

- Ti - V system with V content comprised between 14.8 and 20 wt.%; or

ternary alloys selected from the group consisting of:

- Ti - Mo - Zr system with $11 \leq$ Mo $\leq 15$ wt.%; and $5 \leq$ Zr $\leq 10$ wt.%

- Ti - Mo - Sn system with $10 \leq$ Mo $\leq 12$ wt.%; and $2 \leq$ Sn $\leq 6$ wt.%.

Exemplary titanium alloys starting materials for use in additive manufacturing such as by laser powder fusion bed and resulting in an alloy as defined herein can be: Ti-12Mo, Ti-8Mo-2Fe, Ti-10.5Mo-1Fe, Ti-12Mo-10Zr, Ti-8.5Cr-1.5Sn, Ti-10V-4Cr-1Al, Ti-15V-3Mo-2Al, Ti-3Al-5Mo-7V-3Cr, Ti-7Mo-3Cr, Ti-9Mo-6W, Ti-25Nb-3Zr-3Mo-2Sn, Ti-10Mo-4Nb-2V-3Al and Ti-4Al-7Mo-3V-3Cr, wherein the numerical values indicate the amount of additional metal particles (expressed in wt.%)). The above-mentioned list is non-exhaustive and functions only as indicative for some exemplary alloys.

A second aspect of the invention relates to a powder for additive manufacturing by laser powder bed fusion. The powder comprises the titanium alloy according to the present invention and its preferred embodiments.

Preferably, average powder size is below 250 μm.

More preferably, powder size distribution of $D_{50}$ is between 20 - 40 μm; and $D_{90}$ is between 30 - 60 μm.

The third aspect of the present invention relates to a method of manufacturing a titanium alloy.

The method typically comprises the steps of

- Providing a titanium alloy comprising titanium and further metallic elements, and wherein said titanium is at least 95% of β-metastable;

- Optionally increasing the temperature of the powder above the β transus temperature; and water quenching of the homogenized alloy;

- Introducing defects in the initial state of said titanium alloy representing between 1% and 6% in volume of the alloy.

A non-exhaustive list of β transus temperature can contain temperature between: 900 and 920°C forTi-12Mo, Ti-8Mo-2Fe, Ti-10.5Mo-1Fe, Ti-12Mo-10Zr, Ti-8.5Cr-1.5Sn, Ti-10V-4Cr-1Al, between 950 and 975°C for Ti-15V-3Mo-2Al, and between 1000°C and 1030°C for Ti-3Al-5Mo-7V-3Cr (wt.%).

In a preferred embodiment, the step of homogenization of the powder alloy by increasing the temperature comprises irradiating the powder by laser beam having energy density more than 85 J/mm³, preferably more than 120 J/mm³, even more preferably more than 130 J/mm³, even more preferably more than 170 J/mm³.

Said laser powder bed fusion can also result in densification and transform a juxtaposition of powder into one solid piece.

In another preferred embodiment, the temperature of the powder is above β transus temperature for at least 2 minutes, preferably for at least 10 minutes, generally for 20, 25, or 30 minutes maximum, in an artificial atmosphere consisting of inert gas, preferably argon.

In another preferred embodiment, the powder is treating by cold compaction with pressure between 700 and 800 MPa before the step of homogenizing.

The titanium alloys of the invention can also be produced through:

selective laser melting such as through Laser Power Bed Fusion;

laser-drilling holes in a wrought plate of the titanium material; or

compaction followed by pressure-less sintering.

The following specific experimental examples are provided in support of the claimed invention but are not to be seen as limiting the scope of the invention.

**Examples**

Example 1: Ti-12Mo alloy manufactured by laser powder bed fusion (L-PBF)

In this example, Ti-12Mo was obtained by method of additive manufacturing, such as L-PBF. The Ti-12Mo used comprised 95% of $\beta$-metastable microstructure, wherein Mo is homogenously dispersed in titanium alloy matrix.
Titanium grade1 powder was mixed with pure molybdenum powder to produce the feedstock for L-PBF. To ensure powder blend homogeneity, the mixing was carried out by a shaker used for homogeneous mixing of powdery substances with different specific weights and particle sizes during about 16 hours. The resulting powder mix presented a $D_{50}$ and a $D_{90}$ of 30 and 45 $\mu$m, respectively, as measured by laser granulometry.
Samples of Ti-12Mo alloy were manufactured on pure Ti substrate, using a laser system for laser powder bed fusion, in particular DMP-X200 3D printer (3D Systems Inc, United States). The different printing parameters used, and their associated energy densities, are given in Table 1. In addition, the level of residual oxygen within the Ar atmosphere is preferably maintained below 200 ppm during the whole manufacturing process.
The energy density of the laser was kept higher than 120 J/mm$^3$.
A subsequent heat treatment is provided to ensure $\beta$-solubilisation by flash heat treatment at a temperature between 900°C and 920°C, which is equal to $\beta$ transus temperature of the Ti-12Mo system.
The resulted product was subjected to water quenching.
Density measurements and microstructural characterisations were performed on 10*10*10 mm$^3$ side cubes, while dog-bones and samples for in situ X-Ray tomography tensile tests were extracted from plates of 80*12*2 mm$^3$ and 32*5*9 mm$^3$, respectively. All these parts were printed using the hexagonal lasering strategy available in the above-mentioned 3D Systems software. Samples of Ti-12Mo alloy were then separated from the substrate by electrical discharge machining (EDM).

| Laser Power (W) | Speed (mm/s) | Hatching space (µm) | Layer thickness (µm) | Energy density (J/mm$^3$) |
|---|---|---|---|---|
| 80 | 400 | 70 | 30 | 95 |
| 270 | 1500 | 50 | 30 | 120 |
| 175 | 700 | 50 | 30 | 167 |

Table 1: Printing parameters used in this study and their associated energy densities.

Note that an energy density of 95 J/mm$^3$ resulted in an inhomogeneous sample (not part of the invention), while an energy density of 120 J/mm$^3$ resulted in a homogeneous dense sample and an energy of 167 J/mm$^3$ resulted in a homogeneous porous sample according to the invention. The minimal energy density can hence be set at about 120 J/mm$^3$.

*a) Product characterization*

To ensure avoiding the presence of coarse $\omega$ precipitates which could result from the reheating associated with the successive layer manufacturing, L-PBF samples were shortly annealed for a few minutes at 900 °C and water quenched before being characterized. This also enabled to obtain samples with the same final cooling rate than the one applied to the reference cast samples used for comparison in this study. After rolling, cast samples were recrystallized for 15 minutes at 900°C before being water quenched. In the case of LPBF samples, the annealing step allows for $\beta$-solubilisation which enables to eliminate isothermal $\omega$ precipitates that embrittle the alloy and suppress the TRIP and TWIP effects.

Scanning electron microscopy (SEM) observations were conducted in a FEG-SEM Ultra55 (Zeiss, Oberkochen, Germany) equipped with an EDS detector. X-Ray diffraction (XRD) patterns were acquired using a Bruker D8 Advance Diffractometer with a Cu tube (30-mA, 30~kV) and a 0.6 mm diffusion slit. Diffracted X-rays were collected between 20 and 90° $2\theta$ (since this range includes all main Ti diffraction peaks), with steps of 0.02° at 6s/step. XRD patterns were then analysed using Eva software (Brucker).

Tensile tests were performed on dog-bone specimens with a calibrated gauge length of 26 mm and a width of 6 mm. The samples were extracted from the printed parts so that the building direction (Z) was perpendicular to the tensile load applied by a Zwick 250 kN tensile machine.

In addition, damage was followed by in situ X-ray tomography during tensile tests for the two most interesting printing conditions. Cylindrical notched specimens with a minimal diameter of 1 mm and a curvature radius of 3 mm were machined from the printing parts and loaded with a 5 kN cell. The building direction was kept perpendicular to the tensile loading. Tests were controlled in displacement (1 $\mu$m/s) and about fifteen increments of progressively decreasing magnitude were imposed from the yield point up to failure. The last displacement increment applied was 10 $\mu$m. Between each tensile increment, samples were scanned using a Vltomelx device (GE Sensing \& Inspection Technologies Phoenix X-Ray GmbH, Boston, MA, USA), equipped with a flat panel detector (Varian PaxScan). Acquisition parameters were set as follows: 80 kV X-ray tube voltage, 280 $\mu$A, 900 projections over 360° rotation, average of 3 images per projection, 333 ms exposure time, and a voxel size of 2 $\mu$m. The displacement position reached prior to scanning was kept during the acquisition, meaning that samples were not unloaded. Acquired 3D volumes were reconstructed from the collected radiographs using the filtered back projection Feldkamp-algorithm implemented in the software provided by the manufacturer. Images analysis was then performed using the open-source Fiji (imaged) software [22].

Porosity was quantified by analyzing images obtained by both microscopy and X-ray tomography. In contrast with analyses performed on micrographs, a binarization alone is not sufficient for tomographic volumes. A mask from each notched cylinder has to be obtained by filling all pores. The initial binarized scan was then subtracted from this mask to only keep pores. Then pores were labelled (one label per pore) to get dimensional information on each of them. Labels containing less than eight voxels were considered as noise and were therefore not kept for characterization. Finally, the volume fraction of porosity was obtained by comparing the number of voxels included in the mask with the number of voxels included in the labelled pores. By applying this method to all the scans acquired during each tensile test, it was possible to follow the evolution of porosities for each sample (number, size and shape). In addition, the smallest cross-section area of each mask was compared to the one of the initial mask to calculate the reached local true strain.

*b) Resulting microstructures and densities*

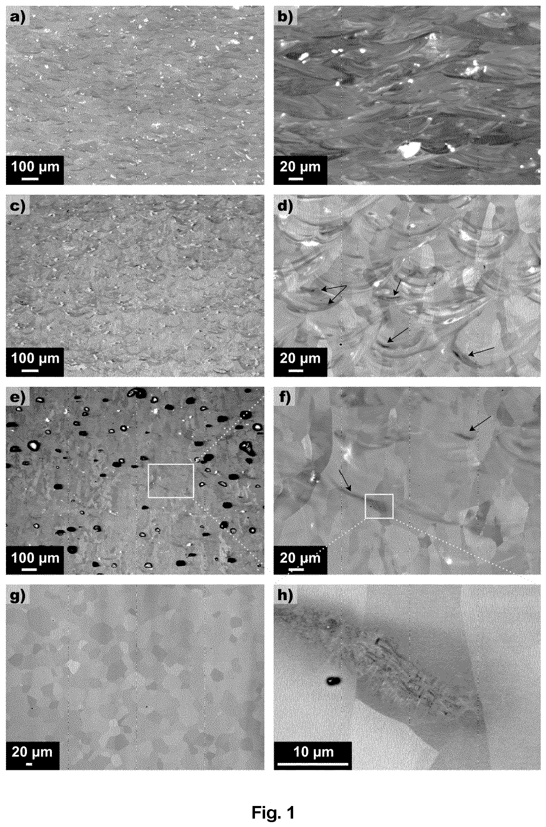

Microstructures of Ti-12Mo alloy obtained for the different printing parameters are presented on **Figure 1** in comparison with the cast sample. In addition, porosity levels measured by the different techniques are gathered in Table 2.

First, it has been observed that porosity fraction increases with the energy density (**Fig. 1 (a)-(e)**) and that keyhole conditions are finally reached for the sample printed with the highest energy density, as highlighted by the large round-shaped pores visible on **Fig. 1 (e)**. This leads to a porosity of around 2 - 2.5%, which is considerably higher than for the two other printed samples.

X-ray tomography analysis measured lower levels of porosity. This might be due to the lower resolution reached by this technique and to the presence of unmolten powders trapped within pores. Indeed, they reduce the volume analysed as being porosity in case of tomographic volume, whereas they were easily removed from SEM images.

| Energy density (J/mm³) | Micrographs Porosity (%) | Tomography porosity (%) |
|---|---|---|
| 95 | 0.02 | Not measured |
| 120 | 0.1 | < 0.01 |
| 167 | 2 – 2.5 | 1.2 |

Table 2: Densities of the L-PBF samples measured by the different techniques

Reaching the highest density is always a concern for L-PBF, but when the building plate is fed with a powder blend, another important issue is the resulting distribution of chemical elements. Backscattered electron (BSE) images of Figure 1 also gives a first overview of the different final chemical homogenisation achieved depending on the used printing parameters. Each printed sample exhibits white zones in their micrographs even though the number and size of these particles decrease with the increasing energy density. It remains coherent since Mo is a hard-to-melt alloying element (melting temperature of 2623°C) and this white area rich in molybdenum could thus even be unmolten Mo particles.

In addition, dark arrows on **Fig. 1 (d) and (f)** indicates the presence of martensite islet at the bottom of melting pools as more clearly shown on the higher magnification micrograph **(Fig.1(h))**. While the different crystallographic grains are well observed for the two samples printed with the highest energy densities, this is much less the case for the sample obtained with 95 J/mm$^3$. However, this does not mean that there is no martensite in this sample.

Finally, the microstructures of printed samples are composed of elongated grains along the building direction compared to the equiaxed grain of the cast sample, which is consistent with what is usually observed in L-PBF of Ti alloys [23-25].

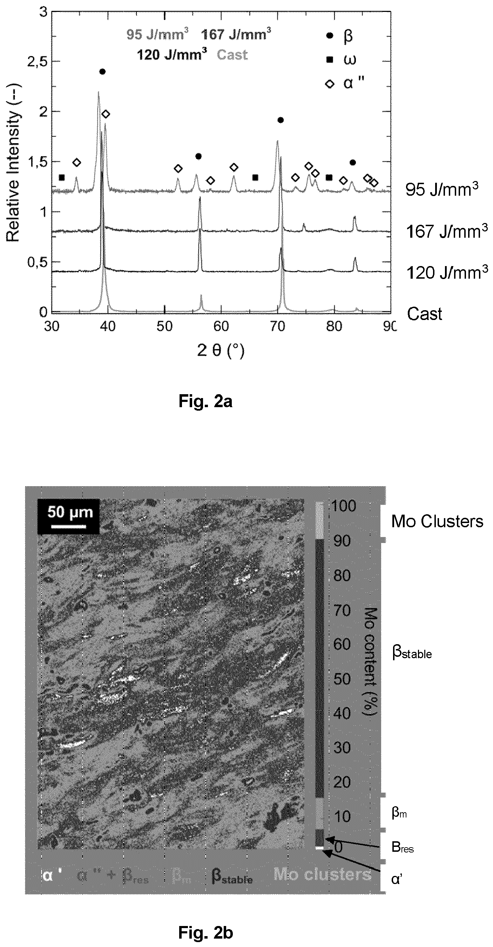

**Fig. 2a** shows microstructure characterization, XRD measurements, performed on each sample of Ti-12Mo and the obtained diffractograms. The diffractograms of the samples printed with the two highest energy densities are very similar to the one of the cast. They present the four main peaks characteristic of the β phase and a flared peak of very low intensity around 80° which corresponds to omega precipitates. Compared to the cast sample, an additional very weak presence of one or two peaks characteristic of the orthorhombic martensite α" is also observed. On the other hand, even though the sample printed with 95 J/mm$^3$ similarly exhibits the four main peaks of the β phase, it also displays all the peaks characteristic of the α" martensite, with intensities reflecting an important proportion. It should also be noted that its peaks corresponding to the β phase are slightly shifted compared to the three other samples. This might be explained by its lower fraction of β phase, which leads to a higher content of β-stabilising molybdenum in the phase.

A phase quantification could have been carried out by Rietveld refinement, but this method would not have allowed to differentiate the metastable β from the stable β. This differentiation is, nonetheless, of primary importance when the aim is to produce parts with both TRIP and TWIP effects by in-situ alloying. Indeed, simultaneous activation of TRIP and TWIP effects during deformation of β-metastable titanium alloys occurs only for a narrow range of composition within the metastable domain. It has thus been chosen to reconstruct phase maps from EDS mapping by discriminating each pixel based on its composition range. Indeed, phases formed during rapid cooling are supposed to be linked to the molybdenum content as follow:

- HCP α' martensite for 0 < Mo < 1wt%
- Orthorhombic α" martensite for 1 < Mo < 8wt%, with increasing amount of residual β
- β-metastable microstructure for 8 < Mo < 15wt%, (simultaneous activation around 12wt%)
- β-stable structure above 15 wt%.

The map constructed by this technique for the sample printed using 95 J/mm$^3$ is shown in **Fig.2b**. Phase fractions derived from this kind of map for each sample are given in Table 3. The lowest energy density leads to the highest chemical, and thus microstructural inhomogeneity, as it does not enable enough molybdenum diffusion. This high inhomogeneity might explain why crystallographic grains were not visible on **Fig. 1 (b)**. Indeed, the contrast of BSE image was probably more affected by the chemical contrast than by the crystallographic structure.

| Energy density (J/mm$^3$) | α' (%) | α" + β$_{res}$ (%) | β-metastable (%) | β-stable (%) | o (%) |
|---|---|---|---|---|---|
| 95 | 1.6 | 43.9 | **49.2** | 5.2 | 0.1 |
| 120 | <0.01 | 1.62 | **95.4** | 2.94 | 0.34 |
| 167 | 0 | 1.7 | **97.3** | 0.96 | 0.04 |

Table 3: Densities of the L-PBF samples measured by the different techniques

*c) Consequences on mechanical properties*

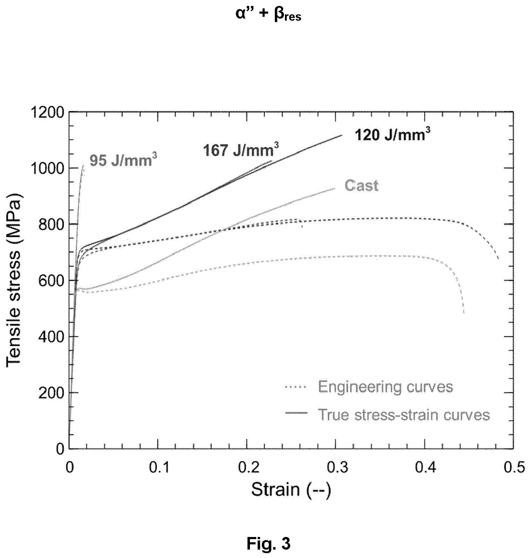

Both engineering and true stress-strain curves obtained for both cast and L-PBF dog-bone specimens are shown in **Figure 3**. Quite uniquely, the almost dense and homogeneous L-PBF sample (printed with 120 J/mm$^3$) exhibits a behaviour similar to the one of the cast sample, but with a yield strength improved by 20 % (689 against 590 MPa). Indeed, titanium alloys processed by L-PBF generally present a higher yield strength but a lower ductility than their cast counterpart [5,7,8,23]. The increased yield strength is usually inferred to the finer microstructures resulting from rapid solidification [24], whereas the loss in ductility is usually induced by the higher content of microstructural defects [25].

According to the example, the Ti-12Mo sample with the highest porosity level (167 J/mm$^3$), keeps a uniform elongation above 25%. This impressive ductility is nevertheless only measured in samples containing a high proportion of metastable beta phase (above 95%).

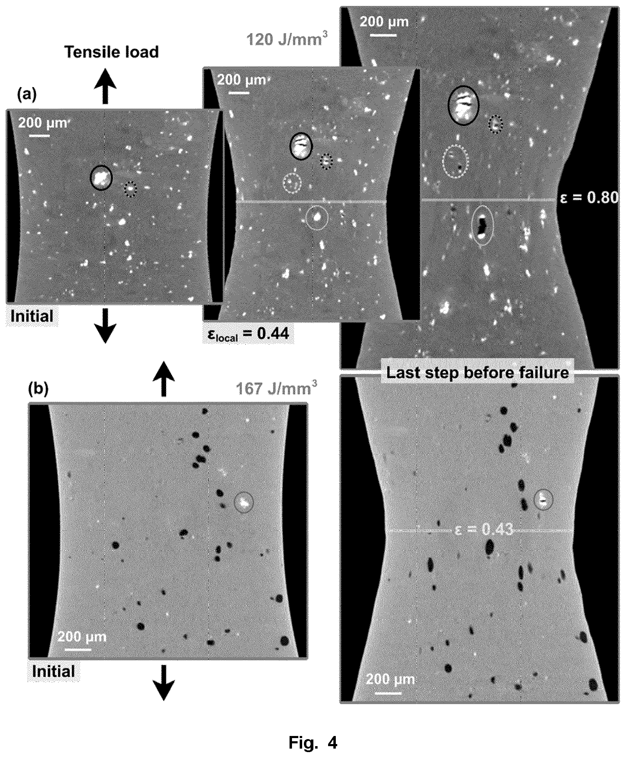

To better investigate damage mechanisms in the two L-PBF homogeneous samples (dense and porous), in situ X-ray tomography was carried out during tensile tests on cylindrical notched specimens. This enables to follow damage in 3D at the location where failure is supposed to happen. In the dense sample, slightly more than one hundred void nucleation events were recorded during the test. These nucleation events were only due to molybdenum particles fracture or decohesion and did not occur in the Ti-12Mo matrix as highlighted by **Figure 4.** Hence, decreasing the unmelted molybdenum content by increasing the energy density from 120 J/mm$^3$ to 167 J/mm$^3$ enables to reduce the nucleation events by a factor of 10. However, it should be noted that the nucleation of these voids did not lead to premature fracture by coalescence. Similarly, voids already present in the sample printed in keyhole conditions (167 J/mm$^3$) only lead to really few coalescence events even though they are elongated in the tensile direction during the test (see **Fig. 4**).

For both samples, formation of cracks starting from some of these pores and propagating in a way to connect several voids together have been observed. Their direction of propagation was usually at 45° with respect to the tensile direction. In addition, fractured surfaces show sheared surfaces formed next to the cavities which are linked by fracture planes covered with small flat dimples. These different observations correspond to a localisation of the deformation in thin bands between or across several large voids or defects.

Fig. 4 represent X-ray tomographic slices presenting the evolution during the tensile test of the same defect population within the sample printed with 120 J/mm$^3$ (a), and within the sample printed with 167 J/mm$^3$ (b). The highest reached local true strain is indicated for each case and main Mo particles breakage are highlighted.

According to the example of Ti-12Mo alloy processed by laser powder bed fusion, starting from a powder blend as raw material, the inventors confirmed that a short annealing heat treatment followed by quenching enable to recover a ductility and work hardening capacity comparable to the cast reference after in situ alloying by L-PBF. In addition, this study shows that reaching chemical homogenisation is more critical than reaching the highest possible density in the case of β-metastable titanium alloys, as this phase brings a high tolerance to defects.

**Example 2: Comparison of Ti12Mo, TiCrSn and TA6V alloys**

**Experimental Procedure**

Elemental powders of titanium, chromium and tin from TLS Technik and molybdenum from Alfa Aesarwere used as raw materials for the L-PBF of 2 different TRIP/TWIP alloys i.e. Ti-12wt % Mo and Ti-8.5 wt % Cr-1.5wt % Sn, called Ti12Mo and TiCrSn in the following.

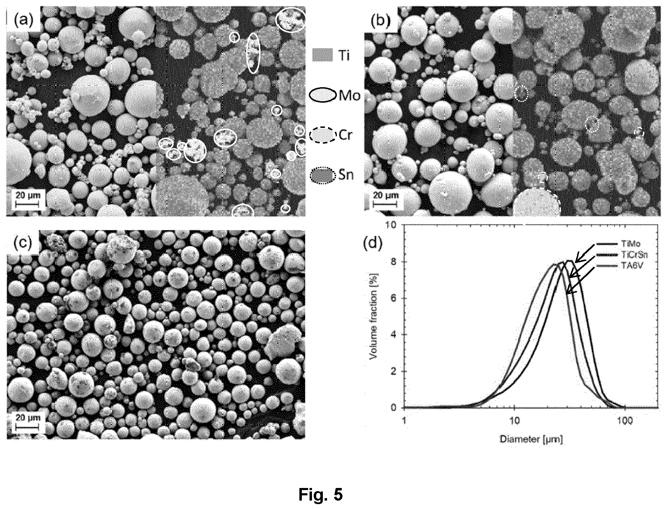

The elemental powders were mixed in a turbula for several hours to ensure homogeneity of the blended powders. In addition, pre-alloyed Ti-6AI-4V powder was also provided by TLS Technik for the sake of comparison. The initial batches are presented in Figure 5, together with the powder size distributions (PSD). Mean diameters of 30, 25 and 23 μm were measured forTi12Mo, TiCrSn and TA6V, respectively, while the D90 were 45, 36 and 33 μm.

TA6V and TiCrSn samples were fabricated using a DMP-X100 machine, while Ti12Mo samples, requiring more power (due to the high melting temperature of Mo), were fabricated using a DMP-X200 machine, both from 3D Systems, with pure Ti substrate. The layer thickness was 30 μm while the residual oxygen level of the Ar atmosphere was kept below 200 ppm during the whole fabrication cycles. Cubes 10*10*10 mm$^3$ in size were printed for density measurements and microstructural characterization, while plates of 80*12*2 mm$^3$ were printed for mechanical testing. All samples were fabricated with the hexagonal strategy available in the 3D Systems software. After separation from the substrate by electrical discharge machining (EDM), samples for uniaxial tensile testing were machined in a 'dogbone' shape with a calibrated gauge length of 26 mm and a width of 6 mm. The thickness of the mechanically tested samples was the thickness of the as-built plates that were only ground with SiC paper to remove the excessive roughness since no contour optimization procedure has been carried out in this study. It is worth noting that the building direction (Z) is perpendicular to the tensile direction.

Density measurements were performed both by the Archimede's method according to the ASTM-B311 procedure using ethanol as wetting medium, and by light microscopy and automated image analysis using the imaged software. The total porosity fraction as well as the pore size distribution were evaluated for each set of building parameters on a surface of 24 mm$^2$. It is worth noting that remaining unmelted or partially blended molybdenum particles (see below) were also included as defects after the thresholding procedure, thus influencing the estimated proportion of 'porosities', which is then different from the densities estimated by the Archimedes' method. In the following, the term "defect" will therefore refer to either porosities and/or Mo particles unless the type of defect is explicitly specified.

Oxygen contents of the initial batches and of the as-fabricated parts were measured with a LECO ONH 836 system. SEM observations were carried out with FEG-SEM Ultra55 equipped with EDS and EBSD detectors.

It is worth emphasizing that the optimization of the processing parameters in the case of blended powders is complexified with respect to the classical case of L-PBF processing of pre-alloyed powders. Indeed, the classical optimization, which mainly consists in the minimization of the residual porosity, must be combined with other constraints which are the melting of pure elements, particularly presenting a high melting temperature like Mo (2610°C), and the in-situ homogenization of the resulting liquid. A preliminary study has been conducted in order to refine the process window in the case of Ti12Mo. A linear energy density parameter (defined as power/speed) ranging from 140 to 270 J m-1 was found to produce satisfactory results in terms of single-tracks shape and continuity. 22 different combinations of power level (P) and laser speed (S) were investigated, each time for two hatch spacings (hs), 50 and 70 μm. Power level P ranges from 80 to 275 W, laser speed S ranges from 300 to 1800 mm s-1. Specific sets of parameters corresponding to various combinations of levels of porosity and chemical homogeneity will be presented in details in the following, even though the complete set of results will be considered in the case of mechanical properties. Finally, for TiCrSn and TA6V samples, the set of parameters optimized in a preliminary study was considered.

## Results and Discussion

### 1. Influence of the processing parameters on as-built microstructures

### a) Density and defects

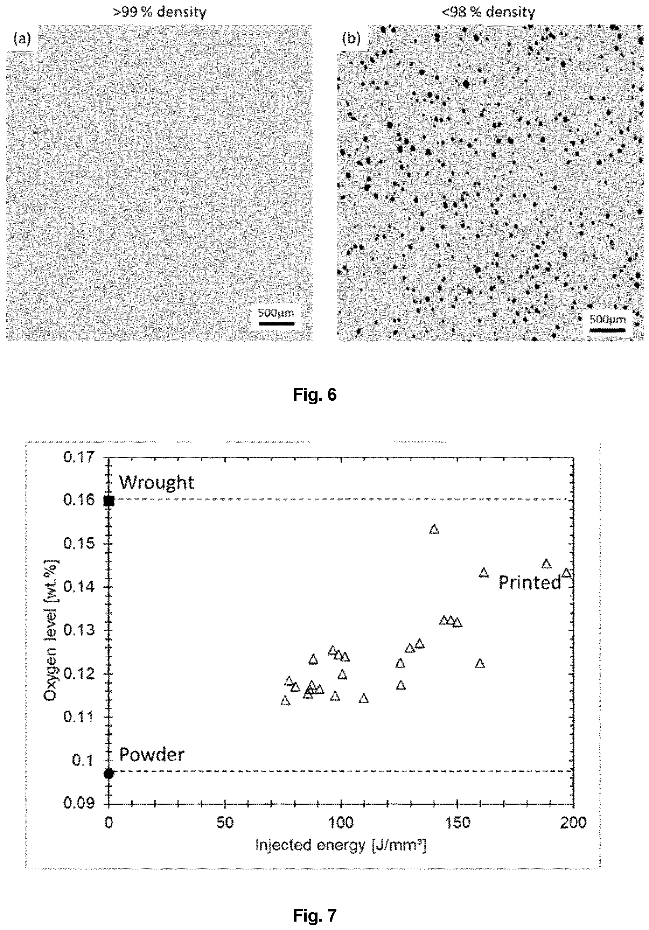

The density and characteristics of defects for the Ti12Mo grade were measured for a large range of processing parameters, resulting in a large range of defects quantities and sizes. Figure 6 presents typical optical micrographs of Ti12Mo when the density is larger than 99% (Fig. 6(a)) or smaller than 98% (Fig. 6(b)). Representative values are given in Table 4. In the case of TiCrSn and TA6V alloys, values are given for the samples with the highest levels of density.

|  | P | v | h | Archimedes density | Image based density | defects mean radius |
|---|---|---|---|---|---|---|
|  | [W] | [mm/s] | [μm] | [%] | [%] | [μm] |
| Ti12Mo | 100 | 500 | 70 | 99.32 | 99.99 | 3.4 |
|  |  |  | 50 | 99.09 | 99.06 | 4.8 |
|  |  | 700 | 70 | 98.86 | 99.96 | 9.8 |
|  |  |  | 50 | 99.39 | 98.94 | 4.8 |
|  | 175 | 700 | 70 | 98.02 | 97.30 | 19.5 |
|  |  |  | 50 | 97.24 | 96.39 | 18.3 |
|  |  | 1200 | 70 | 99.34 | 99.98 | 3.5 |
|  |  |  | 50 | 99.55 | 99.71 | 4.2 |
|  | 275 | 1500 | 50 | 99.48 | 99.56 | 5 |
| TiCrSn | 100 | 800 | 70 | 99.02 | 99.08 | 6.8 |
| TA6V | 90 | 650 | 70 | 99.80 | 99.78 | 4.5 |

Table 4 : Archimedes density and defects analysis (fraction and size) obtained for focused sets of parameters.

As shown in Table 4, the density obtained for TA6V fits with the highest values reported in the literature (between 99 and 99.9%), as well as the pore radii ranging from 5 to 50 μm. In the case of Ti12Mo and TiCrSn samples, the density is slightly smaller, while the mean pore size remains small for most of the samples. Previous work on Ti-Mo processed by L-PBF claimed density levels between 85.5 and 99.7%. It can be concluded that the reached densities are acceptable for all samples.

**b) Oxygen content**

The oxygen content of the processed samples was measured to assess a potential influence of the processing conditions on the level of dissolved oxygen and resulting mechanical properties. As shown on Figure 7, it is found that the oxygen picking is correlated to the volumetric injected energy defined as:

$$E_{inj} = \frac{P*time}{volume}$$

where $P$ is the power of the laser, *'time'* is the total building time of the sample used for oxygen measurement, and *'volume'* is the total volume of the sample. It is worth noting that this volumetric injected energy parameter $E_{inj}$ is different from the energy density parameter E usually used in L-PBF (and defined as $E = P / S*h*t$ [J mm-3], with $S$, $h$ and $t$ being the laser speed, the hatch spacing and the layer thickness, respectively). It is observed that the oxygen enrichment seems to follow a linear evolution with this parameter. Figure 7 also shows that the oxygen level in Ti12Mo processed by L-PBF is of the same order of magnitude than in the case of wrought alloy. As the oxygen uptake is very low for all values of injected energies investigated in this work, it can be concluded that these oxygen levels should not influence the triggering of expected plasticity mechanisms.

**c) Chemical homogeneity**

As mentioned above, optimization of the processing parameters in the case of L-PBF of pre-alloyed powders aims first at minimizing solidification-related defects specific to such process like porosities, keyholing, .... In the case of blended elemental powders, the thermally-activated alloying has also to be scrutinized, particularly in the case of hard-to-melt alloying elements such as Mo. Several processing conditions were thus considered, with the aim of characterizing the resulting homogenization after fast melting and cooling. This is still of more fundamental importance when considering the fact that the simultaneous activation of the TRIP and TWIP effects during deformation of β metastable Ti alloys occurs for a narrow range of compositions around a nominal one.

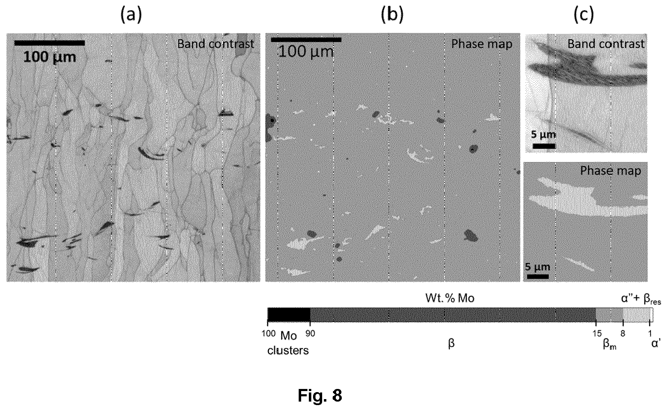

Figure 8 illustrates the as-built microstructure of Ti12Mo with building parameters P=275 W, S=1500 mm s-1 and hs=50 μm as characterized by EBSD (Figure 8(a) - band contrast map) or by EDS (Figure 8(b)). Figure 8(b) actually corresponds to a reconstructed chemical map for which pixels are discriminated based on compositional ranges. Indeed, depending on the Mo content, the phases potentially present in rapidly cooled microstructures are HCP α' martensite (for 0<Mo<1 wt %), orthorhombic α" martensite (for 1<Mo<8 wt %, with increasing amount of residual β phase) and finally a fully β microstructure for Mo>8 wt %. Chemical heterogeneities are clearly visible on this map, consisting in either remaining unmelted Mo clusters or Mo-depleted zones. Furthermore, the microstructure is composed of elongated grains along the building direction, as it is almost systematically observed in additively manufactured Ti alloys. A magnification of a Mo-depleted zone is given in Figure 8(c). The band contrast map highlights needle-shaped precipitates with a thickness of hundreds of nanometers and a few micrometers in length. These needles have been indexed as martensite. It is worth noting that XRD measurements have also been performed on as-built samples, confirming the presence of β (BCC) and α" (orthorhombic) phases of titanium, as well as sometimes peaks corresponding to pure Mo (BCC as well). However, the phase quantification method based on EDS was preferred to avoid texture-induced uncertainties in the Rietveld refinement of diffraction spectra or undiscriminated Ti-β and Mo in the case of EBSD measurements.

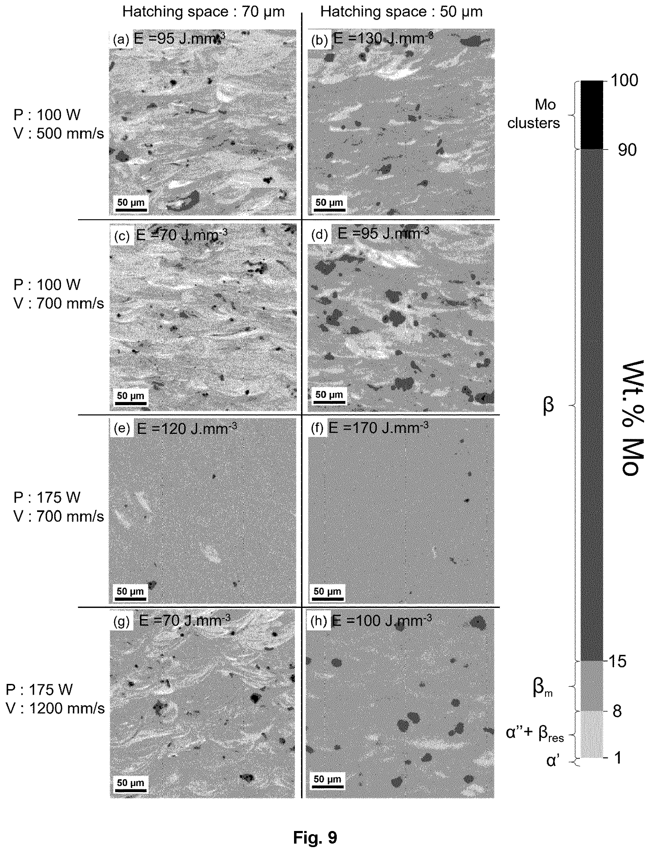

Figure 9 presents such phase maps based on EDS measurements for samples processed following the printing parameters given in Table 4. First, they show that decreasing the hatch spacing from 70 μm ((a), (c), (e) and (g)) to 50 μm ((b), (d), (f) and (h))) leads to less Mo-rich clusters in the Titanium alloy matrix. Secondly, increasing the speed is detrimental to the homogenization for a given level of power, contrarily to the influence of the increase of power for a given speed.

To assess the influence of such chemical heterogeneities, a single deviation to homogeneity criterion of processed microstructures has been defined. It consists in comparing the heterogeneous distribution of alloying elements with respect to the most homogeneous case taken as the reference (i.e. a wrought sample in the present case). Large EDS maps of 500*750 μm2 have thus been measured at the center of samples fabricated following each set of parameters. The size of these maps corresponds to a number of melt pools ranging from 75 to 125, depending on the orientation and hatch spacing (50 or 70 μm), which is considered as representative of the specific solidification process.

The deviation to homogeneity criterion D is defined as follows:

$$D = \sum_{i=0}^{1} (x_i^{printed} - x_i^{wrought})^2$$

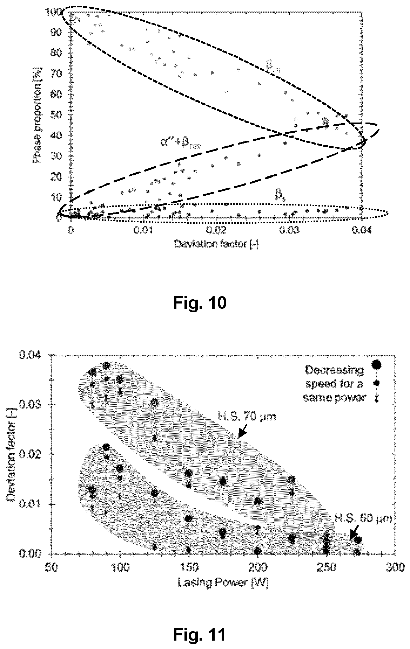

Where $x_i^{printed}$ and $x_i^{wrought}$ are the fractions of pixels of composition *i* (ranging from 0 to 1 and discretized by steps of 0.003) in a printed sample and in the wrought sample, respectively. A value of D close to 0 thus means a more homogenized microstructure. Figure 6 corresponds to the proportions of metastable β phase and of α" + $β_{res}$ as a function of this deviation factor (Figure 10). A monotonous increase of the proportion of β phase with the adequate composition (for the activation of the TRIP and TWIP effects - see below) is observed for decreasing D factor. Figure 11 summarizes the deviation factor D calculated for numerous combinations of processing parameters. It can be seen that decreasing the hatch spacing has a first order effect on the homogenization. On the other hand, homogenization is larger when the lasing power is larger and when the lasing speed is slower. These observations can be rationalized through the size of the melt pools. Indeed, the melt pool size directly depends on the combination of lasing power and speed thus fixing the number of re-melting cycles imposed to a given volume of material. Increasing the power, decreasing the speed and reducing the hatch spacing bring a larger number of re-melting cycles, resulting in a larger chemical homogenization.

In the case of the TiCrSn alloy, a very low value of deviation to homogeneity factor (D=0.0058) has been reached, even with a hatch spacing of 70 μm. This observation can be explained by the fact that both Cr and Sn present lower melting temperatures with respect to titanium, resulting in an easier and more effective homogenization during the L-PBF processing.

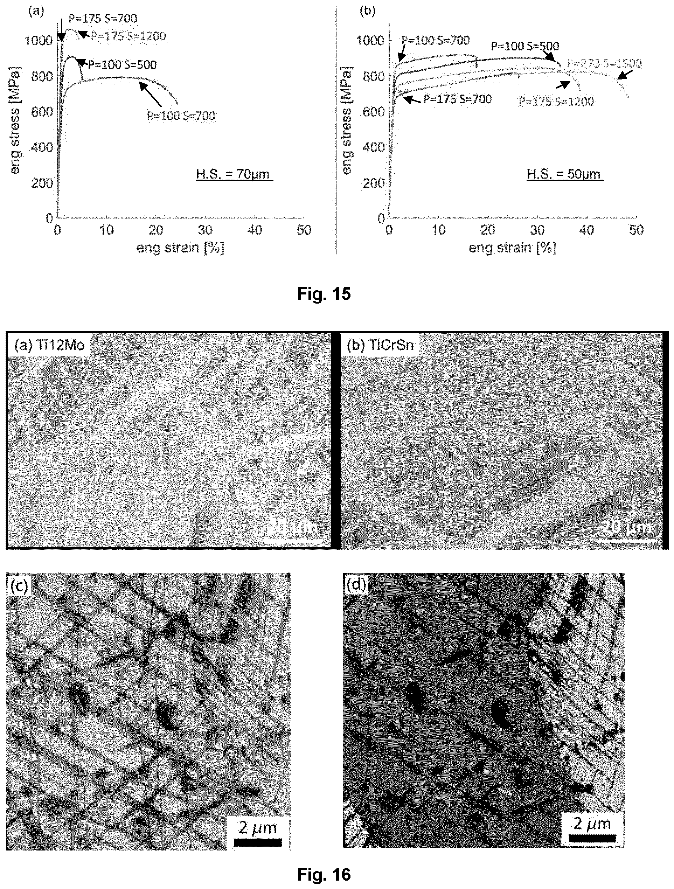

Finally, following the results of this study on the optimization of the printing parameters and their influence on the as-built microstructures of Ti12Mo (but also on the mechanical properties which will be presented later in Figure 15), a sample was selected in order to be able to compare it to its wrought counterpart but also to the TiCrSn and TA6V alloys.

## 2. Comparison between the different alloys, their wrought counterparts and their posttreatments.

Microstructures of Ti12Mo, TiCrSn and TA6V samples processed with optimized parameters are shown in Figure 8 in the as-built and heat-treated states. Applied heat treatments consisted in annealing at 900°C for 90 second or 15 minutes under air, for Ti12Mo or TiCrSn, respectively, followed by water quenching (WQ); and an annealing at 920°C for 2 hours under argon followed by air cooling (AC) for TA6V. This latter heat treatment was chosen to mimic the typical HIP treatment.

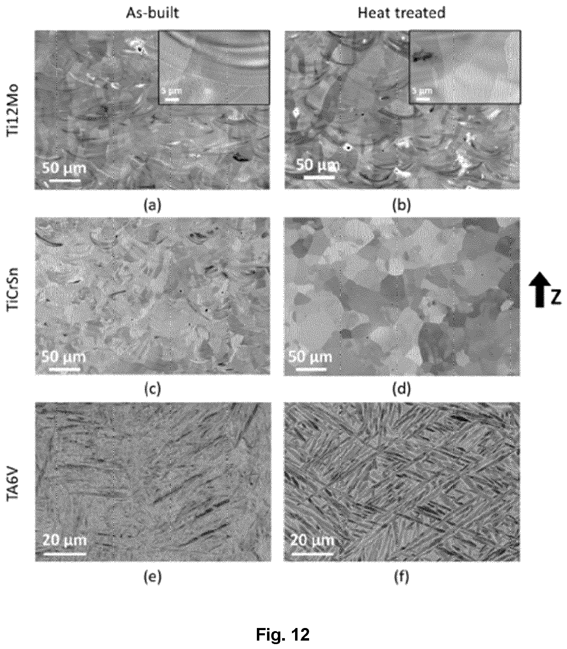

The process parameters in the case of Ti12Mo were P = 275 Wand V = 1500 mm.s-1, bringing homogenization (D<0.001) and a low fraction of small porosities (Table 4). Typical columnar grains elongated along the building direction (Z) are observed (as already reported for Ti alloys), together with remaining chemical heterogeneities associated to unmelted or partially melted clusters of Mo. Melt pool boundaries are clearly visible as depicted in the magnified inset of Figure 12(a). White lines correspond to the initiation of the planar solidification front that quickly turns into a fine dendritic solidification front. In the heat-treated Ti12Mo sample (Figure 12(b)), these white lines and fine dendrites are no longer visible.

However, the former melt pool boundaries can still be guessed owing to the chemical contrast brought by the remaining local chemical heterogeneity. In the case of the TiCrSn as-built sample, some Cr particles were scarcely observed, but disappeared in the heat-treated conditions. Finally, microstructures of as-built and heat-treated TA6V samples are given in Figures 12(e) and (f), respectively. As-built microstructure consists of very fine acicular α' martensite. Prior columnar β grains of hundreds of μm in height are present due to epitaxial growth during solidification. Heat-treated microstructure (Figure 12(f)) on the other hand, exhibits a growth of α lamella, with β phase precipitation between them.

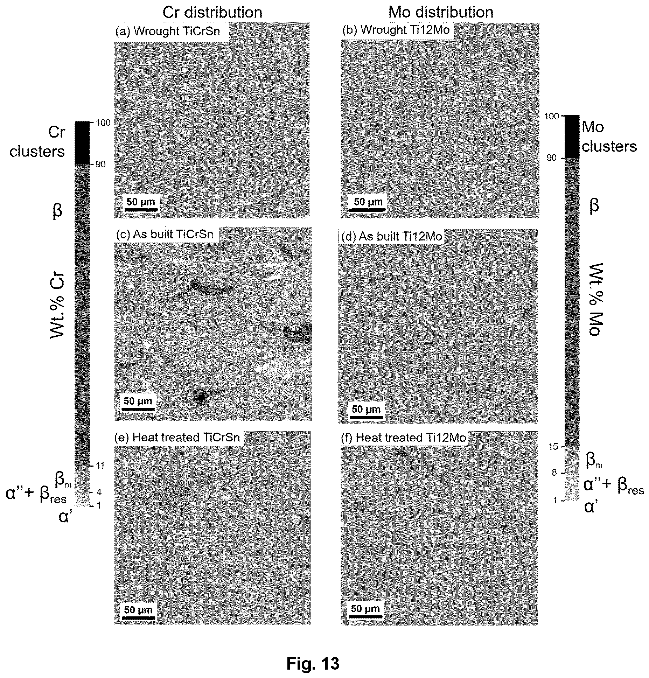

A comparison of the EDS maps corresponding to the wrought/cast reference, as-printed and printed + heat treated states for Ti12Mo and TiCrSn alloys is given in Figure 13. A good homogenization of the elements can be finally reached, even though high melting point Mo remains difficult to fully homogenized.

Tensile curves of these as-built and heat-treated samples are given in Figure 10 for the 3 grades. For both TRIP/TWIP Ti12Mo and TiCrSn alloys, as-built samples show very high yield strength, larger than 1 GPa, but no uniform elongation once plastic yielding occurs with fracture occurring very quickly after necking. In the case of Ti12Mo, heat-treated sample exhibits a yield strength of 695 MPa followed by a uniform elongation of 36 % with an ultimate tensile strength (UTS) of 820 MPa. TiCrSn grade exhibits yield and ultimate tensile strengths of 680 and 945 MPa, respectively, with a uniform elongation of 30 %. These levels of properties correspond to the typical ones obtained in the case of wrought TRIP/TWIP Ti alloys, even if the starting materials consisted in blended elemental powders. Interestingly, the flash heat treatment applied in the case of Ti12Mo is enough to regenerate the mechanical properties from the as-built state. It is believed that the high yield strength and lack of work hardening of the as-built state results from ω precipitates coarsening occurring during successive reheating associated with the consolidation of the successive layers, leading to a brittle behavior. When globally reheated above the β transus during the post-heat-treatment, these coiso precipitates are completely dissolved, regenerating the effective microstructure. In the case of TiCrSn, a longer heat treatment of 15 minutes was applied not only to regenerate the β phase, but also to erase the Cr heterogeneities.

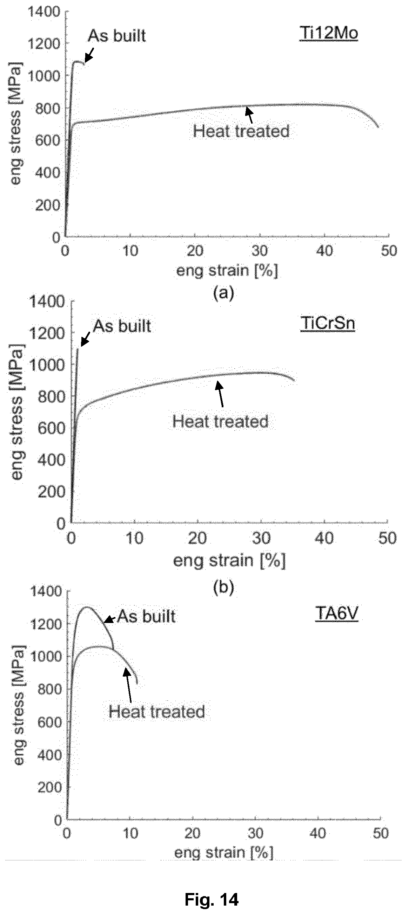

Finally, the tensile curves of TA6V in as-built and stress-relieved conditions are also given in Figure 14 for the sake of comparison. This heat treatment brings some softening with a slight increase of the deformation.

**a) Influence of the defect density on the mechanical properties**

Figure 15 illustrates the engineering stress - strain curves of heat-treated Ti12Mo samples after different processing conditions, thus presenting different amounts of defects (chemical heterogeneities and porosity levels) scrutinized above. The as-built curves are not given since it was shown in the previous section that a flash heat treatment is mandatory to restore the TRIP/TWIP properties absent in the built Ti12Mo samples. A wide range of mechanical properties results from the investigated processing parameters. Particularly, the ductility ranges from an elongation at fracture of less than 1% (fracture before the onset of plasticity) up to 50%. Interestingly, a lower spread of the mechanical properties can be observed for samples built with a hatch spacing of 50 $\mu$m, which also present a larger chemical homogeneity as shown on Figure 11.

The SEM and EBSD micrographs of Figure 16 confirm the presence in Ti12Mo and TiCrSn of a dense network of deformation features confirmed by EBSD as resulting from the activation of the TRIP and TWIP effects.

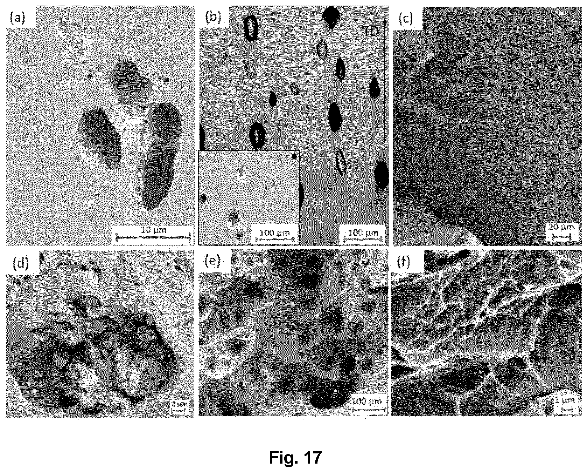

Figures 17(a) to (d) highlight 4 representative features that can be observed on the fracture surfaces of printed Ti12Mo: (i) small flat dimples (Figure 17(a)), (ii) very large dimples surrounded by smooth shear surfaces (Figure 17(b)), (iii) small broken particles in a ductile, teared matrix (Figure 17(c)), and/or (iv) very small dimples (around 100-200 nm in diameter, Figure 17(d)). The first fracture feature (Fig. 17(a)) is similar to what has been observed on the fracture surface of wrought Ti12Mo [14]. It was shown that these flat dimples are associated to the formation of thin localized shear bands at the very end of the deformation process, due to the absence of classical void nucleation in the weak parts of the microstructure [14]. That feature is therefore associated with high ductility in terms of true fracture strain. The second fracture feature (Fig. 17(b)) shows very large dimples inside the fracture surface and is only observed in the samples already containing large cavities in the initial microstructure. The third fracture feature (Fig. 17(c)) originates from void nucleation events by fracture of small particles, identified as Mo-rich particles by EDS, and/or decohesion between these particles and the matrix. These three fracture features are observed in the most ductile specimens, showing that the presence of large initial cavities as well as unmelted Mo particles do not constitute strongly embrittling features for these alloys. The relative unsensitivity of the ductility of the alloys on the presence of cavities and unmelted Mo particles is currently under investigation.

On the other hand, the fourth fracture feature (Fig. 17(d)) is observed in the case of the less ductile specimens, also corresponding to the less homogeneous specimens. Such small dimples are typically observed on the fracture surface of Ti alloys containing fine $\alpha/\alpha'$ laths in a $\beta$ matrix [15]. Unlike the initial Mo particles and initial voids, the presence of these $\alpha/\alpha'$ laths in the initial microstructure, resulting from a low homogeneity level, seems to be detrimental to the ductility of the 3D printed Ti-12Mo alloys.

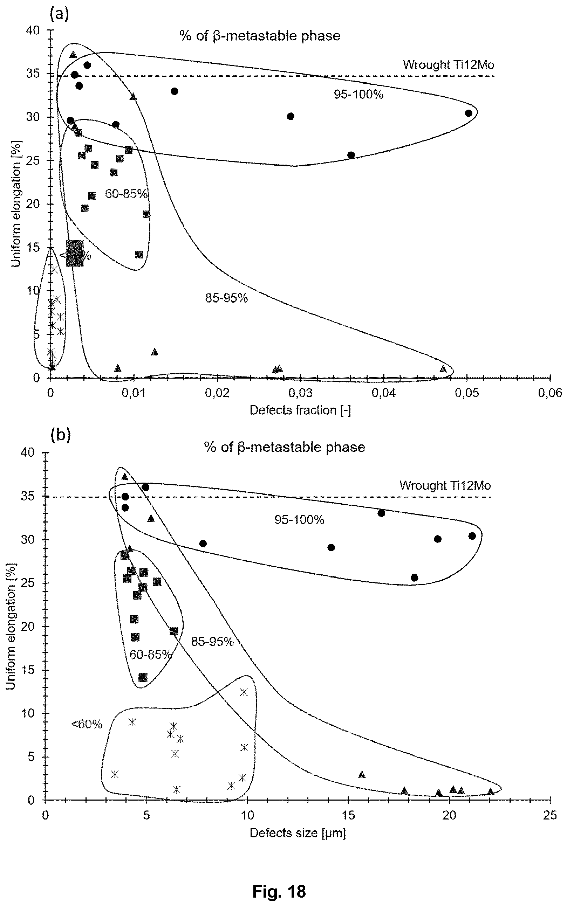

Figure 18 presents the engineering uniform deformation of numerous samples as a function of the defect fraction (Figure 18(a)) or the mean size of the defects (Figure 18(b)), respectively. The proportion of $\beta$-metastable phase resulting from the more or less effective homogenization occurring during the laser processing has also been indicated for the different samples. Figure 18(a) shows that the proportion of $\beta$-metastable phase strongly influences the magnitude of the uniform deformation decay with the presence of defects. Indeed, for almost fully $\beta$-metastable microstructures, the presence of a fraction of defects up to 5% does not bring a significant reduction of the uniform deformation. However, when the proportion of $\beta$-metastable phase decreases below 90%, not only the sensitivity to the presence of defects drastically increases, but also the global level of uniform elongation decreases (particularly when the proportion of $\beta$-metastable phase is less than 80%). Figure 18(b) shows that the $\beta$-metastable phase also exhibits a very strong tolerance to large defects (up to more than 20 $\mu$m), while large defects strongly decreases the level of uniform elongation when less $\beta$-metastable phase constitutes the microstructure.

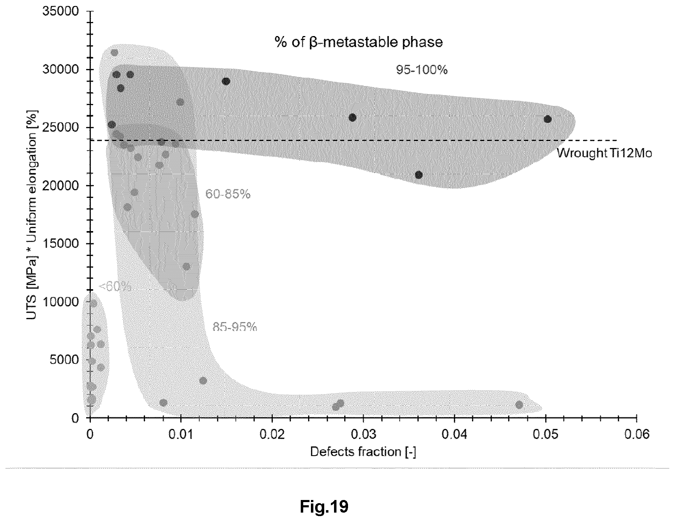

Beside uniform deformation, which has been chosen because of its generally large sensitivity to the presence of defects, the influence of the presence of defects on the product between the ultimate tensile strength and the uniform elongation is also worth being assessed. Figure 19 presents this influence, still also considering the influence of the proportion of $\beta$ metastable phase. The same trend is observed, with a ductility reduction of only 10% for a defect proportion up to 5%, when the microstructure is almost completely $\beta$ metastable. Furthermore, the ductility seems significantly improved with respect to the cast reference when almost fully dense samples are tested.

However, the presence of defects has catastrophic consequences on the ductility of microstructures containing more than 5% of other phases.

These results thus strongly suggest that TRIP/TWIP $\beta$-metastable Ti alloys can be effectively processed by L-PBF, but also that they exhibit a low sensitivity to the presence of defects, which are inherently present with such a process. This is in phase with the unique properties of damage and fracture of such alloys reported above and also in the case of cast reference. They thus constitute a promising solution to damage tolerance for additive manufacturing.

**b) Comparison with wrought TRIP/TWIP alloys**

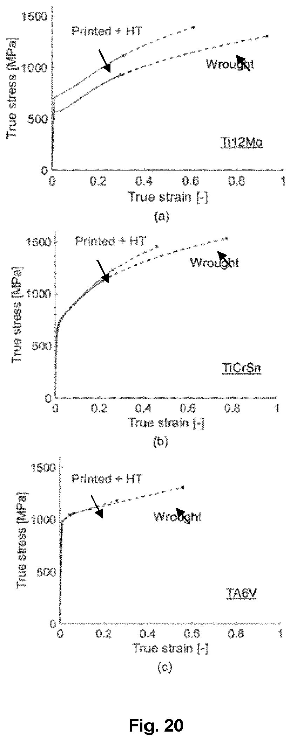

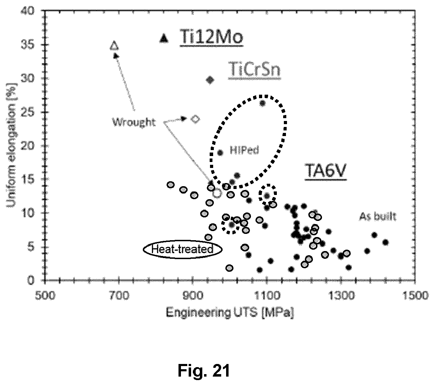

Figure 20 compares the true stress - true strain curves of Ti12Mo and TiCrSn alloys processed either by rolled cast ingots or by L-PBF following optimized conditions and completed by a simple flash heat treatment. Quite uniquely, the samples processed by L-PBF present the best mechanical properties in terms of yield strength, UTS and uniform elongation. Indeed, most alloys processed by L-PBF generally present a higher yield strength but lower levels of ductility compared to their wrought counterparts as illustrated for TA6V on Figure 21. On the one hand, the increase of the yield strength in additively-processed samples is inferred to the finer microstructures resulting from rapid solidification. On the other hand, the ductility is generally decreased due to higher content of microstructural defects, which promote the damage mechanisms and crack propagation. This fact is particularly true in the case of TA6V, which is not very damage-tolerant due to its lamellar microstructure. Some exceptions must be highlighted, where the strength-ductility trade-off of classical additive manufactured alloys such as TA6V [65] and 316L alloys could be increased by favouring nano-finrinning through a controlled microstructure (texture, grain size).

**Example 3:** Ti-8.5Cr-1.5Sn alloy manufactured by laser powder bed fusion (L-PBF)

The following example is directed to obtaining porous β-metastable alloys showing TRIP (Transformation Induced Plasticity) and TWIP (Twinning Induced Plasticity) effect and presenting a porosity level about 3-5%. The propositions enable to produce dog-bone specimens for tensile test to quickly measure some mechanical properties (yield strength, ultimate tensile stress, uniform elongation, fracture strain). However, the produced shape is only an example, and the present invention can be embodied in any shape.

Elemental powders of titanium, chromium and tin were mixed together. Powders were mixed in the same shaker mixer as defined in the previous example for 15h, giving a powder size distribution of $D_{50}$ and $D_{90}$ about 25μm and 36μm, respectively.

By means of additive manufacturing, in particular L-PBF, the alloy can be deposited on 80x12x2 mm$^3$ plates using DMP-X100 3D printer (3D Systems Inc, United States) in a high purity Ar atmosphere (residual oxygen under 200 ppm).

Exemplary printing parameters can be as follows:

Laser power P comprised between 80 and 120 W
Laser velocity v comprised between 450 and 550 mm/s
Hatching space h comprised between 65 and 70 μm.
Layer thickness t between 25 and 35 μm.

The volumic energy density defined as $\dfrac{P}{v*h*t}$ comprised between 85 and 95 J/mm$^3$

The powder is subjected to homogenization heat treatment at a temperature between 900°C and 920°C during 15 - 30 min, followed by water quenching

The final product can be machined to 26x6x2 mm$^3$ flat dog-bones specimens, for example using electrical discharge machining.

**Example 4:** Manufacturing a pre-alloyed powder by L-PBF.

Also Ti-12Mo pre-alloyed powders can be manufactured by laser powder bed fusion (L-PBF). The Ar atomized pre-alloyed powders should first be sieved to keep only particles presenting a diameter below 106 μm.

By means of additive manufacturing, 80x12x2 mm$^3$ plates using DMP-X200 3D printer (3D Systems Inc, United States) in a high purity Ar atmosphere (residual oxygen under 200 ppm) can be made. Exemplary printing parameters can be adjusted as follows:

Laser power P comprised between 225 and 275 W
Laser velocity v comprised between 700 and 800 mm/s
Hatching space h comprised between 80 and 85 μm.
Layer thickness t between 25 and 35 μm.

The volumic energy density defined as $\dfrac{P}{v*h*t}$ comprised between 130 and 140 J/mm$^3$

The parts are then subjected to homogenization by β-solubilisation by flash heat treatment at a temperature between 900°C and 920°C during 2 to 15 minutes under high purity Ar atmosphere followed by water quenching.

The resulting product can be machined to 26x6x2 mm$^3$ flat dog-bones specimens, for example using electrical discharge machining

**Example 5:** Compaction and sintering of Ti12Mo pre-alloyed powders

In another example, Ti12Mo Ar atomized pre-alloyed powders can be sieved to keep only particles presenting a diameter below 250 $\mu$m.

The powder can be subjected to cold compaction between 700 and 800 MPa.

The compacts can be heat-treated under Ar atmosphere comprising:

A heating ramp of 10-15°C per minute; and
A sintering plateau at a temperature between 1150 and 1250 °C, for a duration between 2 and 3 hours;

The powder is then subsequently cooled by water quenching and the resulting product can be machined to 26x6x2 mm$^3$ flat dog-bones specimens, for example using electrical discharge machining.

References

[1] K. Kempen et al., J. Manuf. Sci. and Eng. (2014) 136-142.

[2] R. Li et al., Int J Adv Manuf Technol 59 (2012) 1025-1035.

[3] T. Mukherjee et al., J. Manuf. Process. (2018) 442-449.

[4] C. Meier et al., Annu. Rev. Heat Transf. 20 (2017).

[5] C. Qiu et al., Mater. Sci. Eng. A. 578 (2013) 230-239.

[6] C. de Formanoir et al., Mater. Res. Lett. 5 (2017) 201-208.

[7] G. Kasperovich et al., J. Mater. Process. Technol. 220 (2015) 202-214.

[8] S. Leuders et al., Int. J. Fatigue. 48 (2013) 300-307.

[9] C. Su et al., J. Alloys Compd. 857 (2021) 157552.

[10] L. Zhao et al., Addit. Manuf. 36 (2020) 101499.

[11] B. Vrancken et al., Acta Mater. 68 (2014) 150-158.

[12] J.H. Martin et al., Nature. 549 (2017) 365-369.

[13] M.L. Montero-Sistiaga et al., J. Mater. Process. Technol. 238 (2016) 437-445.

[14] M. Marteleur et al., Scr. Mater. 66 (2012) 749-752.

[15] C. Brozek et al., Scr. Mater. 114 (2016) 60-64.

[16] F. Sun et al., Acta Mater. 61 (2013) 6406-6417.

[17] P.J. Bania, JOM. 46 (1994) 16-19.

[18] L. Choisez et al., Nat. Commun. 11 (2020) 2110.

[19] R. Duan et al., Compos. Part B Eng. 222 (2021) 109059.

[20] S.A. Mantri et al., Addit. Manuf. 48 (2021) 102406.

[21] L.Choisez et al., Acta Mater. 220 (2021) 117294.

[22] J. Schindelin et al., Nature Methods 9 (7) (2012) 676-682.

[23] A. Mertens et al., Powder Metall. 57 (2014) 184-189.

[24] M. Masoomi et al., Int. J. Mach. Tools Manuf. 118-119 (2017) 73-90.

[25] H. Galarraga et al., Addit. Manuf. 10 (2016) 47-57.

[26] T. de Terris, et al., Addit. Manuf. 28 (2019) 802-813.

**Claims**

1. A titanium alloy suitable to be manufactured by additive manufacturing, preferably by laser powder bed fusion,

   • wherein the alloy comprising titanium and further metallic elements;
   • wherein said titanium forms a microstructural titanium alloy matrix;
   • wherein the further metallic elements are homogenously dispersed in said titanium alloy matrix;
   • wherein when the alloy is subjected to mechanical loading, changes its microstructure from an initial state to a final state through a martensitic transformation or a mechanical finrinning;
   • wherein in the initial state, said alloy comprises a plurality of defects; and
   • wherein the plurality of defects represents between 1% and 6% in volume of the alloy; and
   • wherein the difference between the strain (strength-ductility balance) of the final state versus the initial state is less than 15%.

2. The alloy according to claim 1, wherein said defects are selected from: porosities, intermetallic particles, and brittle second phases, preferably porosities.

3. The alloy according to claim 1 or 2, wherein the microstructural titanium alloy matrix comprises a β-metastable titanium microstructure.

4. The alloy according to claim 3, wherein the microstructural titanium alloy matrix is at least 95% of β-metastable microstructure, preferably at least 97 % of β-metastable microstructure.

5. The alloy according to claim 4, wherein the microstructural titanium alloy matrix comprises not more than 5% of non-β-metastable titanium microstructures, such as 5% or less, 4% or less, 3% or less, 2% or less or 1% or less of non-β-metastable titanium microstructure, measured and quantified using EDX by linking the local compositions measured with the known phases stabilized at these compositions.

6. The alloy according to anyone of the previous claims, wherein the porosity of the final state is 50% or less in volume, such as 45% or less, 40% or less, 35% or less, 30% or less, 25% or less, 20% or less, 15% or less, 10% or less, 9% or less, 8% or less, 7% or less, 6% or less, 5% or less, 4% or less, 3% or less, 2% or less, 1% or less, when measured by micrograph.

7. The alloy according to anyone of the previous claims, wherein the difference between the initial strain (strength-ductility balance) and the final strain (strength-ductility balance) of alloy is lower than 10%, preferably, lower than 9%, 8%, 7%, or 6%, more preferably lower than 5%.

8. The alloy according to anyone of the previous claims, wherein the further metallic element is selected from the group comprising: niobium, molybdenum, chromium, vanadium, zirconium, tin, tungsten, and aluminium, or mixture thereof.

9. The alloy according to anyone of the previous claims comprises:

   binary alloys selected from the group comprising:

   • Ti - Nb system with Nb content comprised between 38 and 42 wt.%;
   • Ti - Mo system with Mo content comprised between 10 and 15 wt.%;
   • Ti - Cr system with Cr content comprised between 9 and 11.5 wt.%;

• Ti - V system with V content comprised between 14.8 and 20 wt.%; or

ternary alloys selected from the group consisting of:

- Ti - Mo - Zr system with $11 \leq$ Mo $\leq 15$ wt.%; and $5 \leq$ Zr $\leq 10$ wt.%
- Ti - Mo - Sn system with $10 \leq$ Mo $\leq 12$ wt.%; and $2 \leq$ Sn $\leq 6$ wt.%.

10. A powder for additive manufacturing by laser powder bed fusion comprising titanium alloy according to anyone of the previous claims, preferably wherein the average powder size of said powder is below 250 $\mu$m.

11. The powder according to aspect 12, wherein powder size distribution of $D_{50}$ is between 20 - 40 $\mu$m; and $D_{90}$ is between 30 - 60 $\mu$m.

12. A method of manufacturing titanium alloy according to claims 1 to 9, comprising the following steps:

• Providing a titanium alloy comprising titanium and further metallic elements, wherein said titanium alloy forms a microstructural titanium alloy matrix; wherein the further metallic elements are homogenously dispersed in said titanium alloy matrix; and wherein said titanium is at least 95% of $\beta$-metastable;
• Optionally increasing the temperature of the alloy above the $\beta$ transus temperature; and water quenching of the homogenized alloy;
• Introducing defects in the initial state of said titanium alloy representing between 1% and 6% in volume of the alloy.

13. The method according to claim 12, comprising the steps of: elementary titanium alloy powder mixing, additive manufacturing, flash heat treatment above the $\beta$ transus temperature, and water quenching.

14. The method according to claim 12, wherein said defects in the alloy are created though laser-drilling of holes in a wrought plate of titanium material.

15. The method according to claim 14, wherein said defects in the alloy are created though compaction followed by pressure-less sintering.

**Fig. 1**

**Fig. 2a**

**Fig. 2b**

Fig. 3

Fig. 4

**Fig. 5**

EP 4 349 509 A1

>99 % density

<98 % density

Fig. 6

Fig. 7

**Fig. 8**

Fig. 9

**Fig. 10**

**Fig. 11**

Fig. 12

**Fig. 13**

Fig. 14

**Fig. 15**

**Fig. 16**

**Fig. 17**

Fig. 18

**Fig.19**

(a)

(b)

(c)

**Fig. 20**

**Fig. 21**

Europäisches
Patentamt

European
Patent Office

Office européen
des brevets

# EUROPEAN SEARCH REPORT

**Application Number**

EP 23 16 3669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUAN RANXI ET AL: "In situ alloying based laser powder bed fusion processing of [beta] Ti-Mo alloy to fabricate functionally graded composites", COMPOSITES PART B, vol. 222, 1 October 2021 (2021-10-01), page 109059, XP093073718, AMSTERDAM, NL ISSN: 1359-8368, DOI: 10.1016/j.compositesb.2021.109059 * Section 2 * * Section 3.7 * * Section 5 * * figures 1, 7-8, 12-13 * * tables 2-3 * * abstract * | 1-15 | INV. B22F10/28 B33Y10/00 B33Y70/00 C22C14/00 C22F1/18 C22C1/04 |
| X | MANTRI S.A. ET AL: "Suppression and reactivation of transformation and twinning induced plasticity in laser powder bed fusion additively manufactured Ti-10V-2Fe-3Al", ADDITIVE MANUFACTURING, vol. 48, 1 December 2021 (2021-12-01), page 102406, XP093073719, NL ISSN: 2214-8604, DOI: 10.1016/j.addma.2021.102406 | 1-8, 10-15 | |
| A | * Section 2 * * Sections 3.2-3.3 * * Section 4 * * figures 4-5 * * abstract * | 9 | |

_____

-/--

**TECHNICAL FIELDS SEARCHED (IPC)**

B22F
B33Y
C22C
C22F

The present search report has been drawn up for all claims

| Place of search | Date of completion of the search | Examiner |
|---|---|---|
| The Hague | 15 August 2023 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 23 16 3669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUN F ET AL: "Investigation of early stage deformation mechanisms in a metastable [beta] titanium alloy showing combined twinning-induced plasticity and transformation-induced plasticity eff", ACTA MATERIALIA, ELSEVIER, OXFORD, GB, vol. 61, no. 17, 3 August 2013 (2013-08-03), pages 6406-6417, XP028699958, ISSN: 1359-6454, DOI: 10.1016/J.ACTAMAT.2013.07.019 * Section 2 * | 1-15 | |
| A | VARENNE CHLOÉ ET AL: "High impact resistance of a TWIP [beta] titanium alloy: linking the multi-scale deformation and fracture mechanisms", JOURNAL OF MATERIAL SCIENCE, vol. 56, no. 8, 1 December 2020 (2020-12-01), pages 5201-5214, XP037317509, ISSN: 0022-2461, DOI: 10.1007/S10853-020-05582-7 * Section "Experimental" * * abstract * | 1-15 | **TECHNICAL FIELDS SEARCHED (IPC)** |
| A | YU ZHOU ET AL: "Investigating the multiple-pulse drilling on titanium alloy in picosecond laser", JOURNAL OF MATERIALS PROCESSING TECHNOLOGY, vol. 268, 1 June 2019 (2019-06-01), pages 10-17, XP093073729, NL ISSN: 0924-0136, DOI: 10.1016/j.jmatprotec.2018.12.027 * Section 2 * * abstract * | 1-15 | |

The present search report has been drawn up for all claims

| Place of search | Date of completion of the search | Examiner |
|---|---|---|
| The Hague | 15 August 2023 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. KEMPEN et al.** *J. Manuf. Sci. and Eng.,* 2014, 136-142
- **R. LI et al.** *Int J Adv Manuf Technol,* 2012, vol. 59, 1025-1035
- **T. MUKHERJEE et al.** *J. Manuf. Process.,* 2018, 442-449
- **C. MEIER et al.** *Annu. Rev. Heat Transf.,* 2017, 20
- **C. QIU et al.** *Mater. Sci. Eng. A.,* 2013, vol. 578, 230-239
- **C. DE FORMANOIR et al.** *Mater. Res. Lett.,* 2017, vol. 5, 201-208
- **G. KASPEROVICH et al.** *J. Mater. Process. Technol.,* 2015, vol. 220, 202-214
- **S. LEUDERS et al.** *Int. J. Fatigue.,* 2013, vol. 48, 300-307
- **C. SU et al.** *J. Alloys Compd.,* 2021, vol. 857, 157552
- **L. ZHAO et al.** *Addit. Manuf.,* 2020, vol. 36, 101499
- **B. VRANCKEN et al.** *Acta Mater.,* 2014, vol. 68, 150-158
- **J.H. MARTIN et al.** *Nature,* 2017, vol. 549, 365-369
- **M.L. MONTERO-SISTIAGA et al.** *J. Mater. Process. Technol.,* 2016, vol. 238, 437-445
- **M. MARTELEUR et al.** *Scr. Mater.,* 2012, vol. 66, 749-752
- **C. BROZEK et al.** *Scr. Mater.,* 2016, vol. 114, 60-64
- **F. SUN et al.** *Acta Mater.,* 2013, vol. 61, 6406-6417
- **P.J. BANIA.** *JOM.,* 1994, vol. 46, 16-19
- **L. CHOISEZ et al.** *Nat. Commun.,* 2020, vol. 11, 2110
- **R. DUAN et al.** *Compos. Part B Eng.,* 2021, vol. 222, 109059
- **S.A. MANTRI et al.** *Addit. Manuf.,* 2021, vol. 48, 102406
- **L.CHOISEZ ; 2021 et al.** *Acta Mater.,* vol. 220, 117294
- **J. SCHINDELIN et al.** *Nature Methods,* 2012, vol. 9 (7), 676-682
- **A. MERTENS et al.** *Powder Metall.,* 2014, vol. 57, 184-189
- **M. MASOOMI et al.** *Int. J. Mach. Tools Manuf.,* 2017, vol. 118-119, 73-90
- **H. GALARRAGA et al.** *Addit. Manuf.,* 2016, vol. 10, 47-57
- **T. DE TERRIS et al.** *Addit. Manuf.,* 2019, vol. 28, 802-813